# EUROPÄISCHE PATENTSCHRIFT

(11) **EP 2 125 262 B1**
(45) Veröffentlichungstag und Bekanntmachung des Hinweises auf die Patenterteilung: **28.07.2010**
(21) Anmeldenummer: 07856153.7
(22) Anmeldetag: 21.12.2007
(51) Int. Cl.: B21D 13/04, B21D 31/02, D06F 37/02

(54) **Verfahren zum Herstellen einer strukturierten Materialbahn mit einer mehrdimensionalen Strukturierung**
Method for the production of a structured material web having a multi-dimensional structure
Procédé de production d'une bande de matériau structurée à structuration multidimensionelle

(30) Priorität: 22.12.2006 DE 102006062189
(43) Veröffentlichungstag der Anmeldung: 02.12.2009
(73) Patentinhaber: Dr. Mirtsch GmbH, 13465 Berlin (DE)
(72) Erfinder: MIRTSCH, Schokufeh, 13465 Berlin (DE); MIRTSCH, Michael, 13465 Berlin (DE)
(74) Vertreter: Clauswitz, Kai-Uwe Wolfram
(86) Internationale Anmeldenummer: PCT/DE2007/002311
(87) Internationale Veröffentlichungsnummer: WO 2008/077394

(56) Entgegenhaltungen:
- EP-A- 0 866 161
- EP-A- 1 728 936
- EP-B1- 0 693 008
- WO-A-03/054275
- DE-A1- 4 437 986
- DE-A1- 4 445 669
- DE-A1- 19 951 743
- JP-A- 2007 054 351
- US-A1- 2005 252 182

## Beschreibung

Die Erfindung betrifft ein Verfahren zum Herstellen einer strukturierten Materialbahn mit einer mehrdimensionalen Strukturierung.

### Hintergrund der Erfindung

In der Industrie und im Haushalt müssen häufig Feststoffpartikel von fluiden Medien, wie Gase oder Flüssigkeiten, getrennt werden. Beispiele hierfür sind Schleudertrommeln, wie beispielsweise eine Waschmaschinentrommel zum Entfernen des Wassers von der gereinigten Wäsche. Beispiele sind ferner Siebwände und Filtermittel für Filterscheiben, -platten oder - trommeln zum Entfernen von Feststoffpartikeln aus flüssigen Medien, beispielsweise Wasser oder Öl, oder aus gasförmigen Medien, beispielsweise Rauchgase, klimatisierte Luft, verunreinigte Industriegase oder Druckluft. Dabei soll meistens ein möglichst großer Abscheidegrad des flüssigen oder gasförmigen Mediums vom Feststoff erreicht werden. Um einen hohen Abscheidegrad zu erzielen, sind Druck- oder Beschleunigungskräfte erforderlich, die das flüssige oder gasförmige Medium vorzugsweise durch eine durchlässige, beispielsweise gelochte oder perforierte oder feinmaschige Trennwand, beispielsweise in Form einer Filterstütze oder eines Filtermittels drücken. Diese Druck- bzw. Beschleunigungskräfte sind erforderlich, um das Medium zu beschleunigen, um die Reibungskräfte zwischen dem Fluid, den Feststoffpartikeln und der Wand zu überwinden und um das Fluid durch die Trennwand, auf der sich Feststoffpartikel als ein Filterkuchen absetzen können, zu führen. Bei gleichem Abscheidegrad der Feststoffe vom Fluid wird die Größe dieser erforderlichen Druck- bzw. Beschleunigungskräfte wesentlich durch die geometrische Gestalt der Wandung und der Anordnung der Löcher in der Trennwand bestimmt.

Nachteilig ist hierbei insbesondere, dass hohe Beschleunigungs- und Druckkräfte die durchlässige Wand, wie Filterstütze und Filtermittel, mechanisch belasten und ferner energieaufwändig erzeugt werden müssen.

Ferner müssen insbesondere in der chemischen, pharmazeutischen und in der Glasindustrie Fluide aufgeteilt bzw. dosiert werden. Das soll möglichst mit einfachen Mitteln geschehen. Ferner soll häufig aus reaktionstechnischen oder verfahrenstechnischen Gründen die Verweilzeit der Fluide im Aggregat möglichst gleichmäßig sein. Deshalb sollen Totwassergebiete und das örtliche Anstauen von Fluiden soweit wie möglich vermieden werden.

Diese komplexen Zusammenhänge werden am Beispiel einer Waschmaschinentrommel und einer Trennwand für einen Filter näher erläutert.

Die Nachteile infolge hoher Druck- und Beschleunigungskräfte äußern sich bei einer Waschmaschinentrommel insbesondere darin, dass die Wäsche beim Schleudern in die Löcher der Trommelwand gedrückt wird. So entstehen unerwünschte Eindellungen in Form von Noppen in der geschleuderten Wäsche und ferner kleine Faserpartikel, die durch die Löcher in den Laugenbehälter und von dort in das Sieb gelangen. Das ist insbesondere bei der Wäsche aus feinem Textil unerwünscht. Um die Wäsche nicht hoch zu belasten, wird deshalb häufig die Waschlauge aus der gereinigten Wäsche beim Schleudern nicht soweit entfernt, wie es aus technischer Sicht möglich wäre. Die Restfeuchte der geschleuderten Wäsche wird dann in der Regel anschließend durch energieaufwändiges Trocknen nachträglich entfernt.

Aus der DE 10 2005 026 175 A1 ist eine Trommel für Wäschebehandlungsmaschinen bekannt, die mit elliptischen Einprägungen ausgestattet ist, die in Richtung des Innern der Trommel weisen. Weil sich mit Hilfe einer elliptischen oder kreisrunden Gestalt dieser Einprägungen eine ebene Wandfläche oder eine zylindrische Mantelfläche geometrisch nicht vollständig ausfüllen lässt, bleibt stets ein Bereich der ursprünglich nicht-strukturierten ebenen Wand bzw. des zylindrischen Mantels übrig, der nicht von den elliptischen oder kreisrunden Einprägungen erfasst wird. In diesem nicht-strukturierten Bereich der Trommel, der in radialer Richtung am weitesten von der Trommelachse entfernt ist, sind die Löcher für den Laugenaustritt, nachfolgend Flutlöcher genannt, angeordnet. Auf diese Weise entsteht im Bereich der Flutlöcher bei gleicher Schleuderdrehzahl der Trommel die größte Zentrifugalkraft für das Entfernen der Lauge aus der Waschtrommel. Unbefriedigend ist hierbei, dass die Strömung der Lauge in diesem nicht-strukturierten Bereich der Trommelwand, in dem auch die Flutlöcher angeordnet sind, keine geometrische Neigung senkrecht zur Trommelwand vorfindet. Auf diese Weise existiert noch kein geometrisches Gefälle, das ein beschleunigtes Abfließen der Lauge hin zu den Flutlöchern begünstigt. Ein geometrisch radiales Strömungsgefälle existiert lediglich in den Wandbereichen der Einprägungen, nicht jedoch im Bereich der äußeren Trommelwand, wo auch die Flutlöcher angeordnet sind.

Aus der DE 19954027 A1 ist eine Vorrichtung zur Herstellung eines Mantels einer Waschmaschinentrommel bekannt, welche mit einer hexagonalen Wabenstruktur versehen ist.

Mit Hilfe dieser wabenförmigen Oberfläche wird die Waschflüssigkeit, die entlang der Trommelwand strömt, an den gewölbten Wabenstrukturen sanft hin und her gelenkt. Auf diese Weise erfolgt eine vorteilhafte Verwirbelung der Strömung. Die Wabenstrukturen besitzen etwa die Kontur der Wölbstrukturen (EP 0693008), wobei die zum Inneren der Trommel gerichteten Mulden jeweils von Falten eingefasst sind und so die Mantelfläche der Trommel vollständig ausfüllen. Die Flutlöcher sind hierbei in den Sternpunkten der hexagonalen Falten angeordnet. Dadurch ergibt sich im Vergleich zur DE 10 2005 026 175 A1 eine Verbesserung, weil die Flutlöcher aus der DE 19954027 A1 nicht auf einer glatten, einheitlichen, zylindrischen Fläche, sondern lediglich auf einer schmalen, etwa linienförmigen Fläche der Falten angeordnet sind. Dadurch wird in der Trommel aus DE 19954027 A1 das Abfließen der Lauge beim Schleudern gegenüber der Trommel aus DE 10 2005 026 175 A1 verbessert. Jedoch ist diese geometrische Anordnung der Falten und der Flutlöcher in der DE 19954027 A1 noch nicht befriedigend, weil für die beim Schleudern zu entfernende Laugenflüssigkeit im Bereich der Falten kein radiales Gefälle für die Strömung von den Falten hin zu den Flutlöchern existiert. Da die Waschlauge auf diese Weise noch nicht bestmöglich von der Wäsche separiert werden kann, wird die restliche Feuchtigkeit der Wäsche in der Regel durch energieaufwändiges thermisches Trocknen im Wäschetrockner entfernt.

Im Falle einer Trennwand für Filterscheiben, -platten oder -trommeln sowie für Zentrifugen zum Entfernen von Feststoffpartikeln aus flüssigen Medien, wie Wasser oder Öl, oder aus gasförmigen Medien, wie Rauchgasen, klimatisierte Luft, verunreinigten Industriegasen oder Druckluft hat beispielsweise eine Siebwand die bei der Filtration erforderlichen Druckkräfte aufzunehmen. Die Trennwand für einen Filter besteht häufig aus einer Filterstütze und dem Filtermittel, insbesondere engem Maschengitter, Mischfasern, Kunstfasern, Glasfasern, Schaumstoffe. Die Filterstütze hat die Aufgabe, das üblicherweise weiche und feine Filtermittel aufzunehmen und die Druckkräfte aufzunehmen. Diese Druckkräfte entstehen insbesondere dadurch, dass das von den Feststoffpartikeln zu separierende Fluid durch das Filtermittel und den sich darauf bildenden Filterkuchen gedrückt werden muss. Diese Druckkräfte erfordern eine Formsteifigkeit der Siebwand beziehungsweise der Filterstütze, welche durch eine geringe Anzahl von Löchern in der Siebwand bzw. Filterstütze begünstigt wird. Das Problem besteht nun darin, dass im Bereich der nicht gelochten Siebwand das zu trennende Fluid sich aufstauen kann und somit einen verlängerten Strömungsweg zum Loch in der Siebwand bzw. Filterstütze geleitet werden muss. Das erfordert wiederum einen erhöhten Druck für die Separation der Feststoffpartikel vom Fluid.

In der WO 98/40910 und in der US 2005/ 02 52 182 A1 sind gerippte oder gewellte Filtermittel beschrieben, die zwar versteifend wirken, bei denen jedoch die Versteifung nur in Richtung der Profilierung wirksam ist. Senkrecht zur Profilierung bleibt das gerippte oder gewellte Filtermittel biegeweich. Das wirkt sich nachteilig auf die Steifigkeit, beispielsweise von Filterscheiben oder -platten, sowie auf zylindrische oder konische Wickelmodule aus, die ihre Profilierungen, insbesondere Wellen oder Rippen, in axialer Richtung des Moduls besitzen. In der WO 2005/08 24 84 A1 ist ein Filterelement beschrieben, in der ein grobmaschiger Zylinder als Filterstütze und ein fächerförmiges Filtermittel enthält. Um Kosten einzusparen, wäre es wünschenswert, das Filtermittel so zu versteifen, dass es zugleich auch die Funktion einer Filterstütze mit übernimmt. So könnte eine Filterstütze eingespart werden.

Es existieren bereits feinmaschige Metall- bzw. Kunststoffgewebe mit Siebweiten bis in den µm-Bereich, die für Grobpartikel mit etwa 40µm und für kleinere Partikel mit etwa einigen µm als Filtermittel geeignet sind, jedoch häufig nicht über eine ausreichende Formsteifigkeit zur Aufnahme der Druckkräfte (ohne zusätzliche Filterstütze) verfügen. Deshalb erfordern häufig Wickelmodule einen aufwändigen Aufbau bestehend aus Filtermittel und Filterstütze (M. Zogg: Einführung in die mechanische Verfahrenstechnik; ISBN: 3-51906319-0; Abschnitt 4.1.2: Querstromfiltration, Seite 123-128).

Zur Reinigung der Filtereinheiten ohne den erforderlichen Ausbau bzw. Austausch insbesondere der Filtermittel wird gerne eine Reinigung mittels Druckstößen vorgenommen, beispielsweise eines Schlauchfilters (M. Stieß: Mechanische Verfahrenstechnik 2; Springer Verlag, 1997; Abschnitt 7.3.2.3: Bauarten von Abreinigungsfiltern, Seite 27). Hierbei wird ein Druckstoß entgegen der normalen Strömungsrichtung erzeugt, um den angesammelten Filterkuchen abzuwerfen. Nachteilig ist hierbei, dass zur Aufnahme des Filtermittels, beispielsweise eines Schlauchfilters, häufig ein zusätzlicher Stützkorb erforderlich ist. Wünschenswert wäre ferner ein verbesserter hydrodynamischer Freispüleffekt, bei dem das Ansammeln von Feststoffpartikeln an dem Filtermittel bereits während des Filterbetriebes reduziert wird. Auf diese Weise könnte man das Zeitintervall für den Einsatz eines Filtermittels (Batch-Betrieb) bis zum Austausch oder Reinigen verlängern. All das sollte mit möglichst geringem apparativen Aufwand zu realisieren sein.

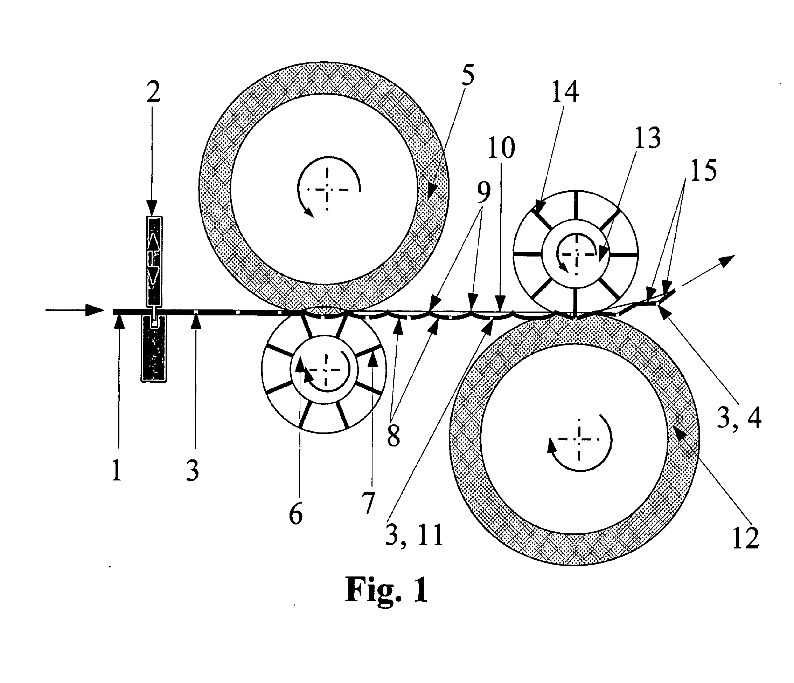

EP 866161 offenbart eine Waschtrommel für eine Waschmaschine, wobei Durchflutungslöcher in als sechskantige Prägungen ausgeführte Waben eingebracht sind (Zusammenfassung, Fig. 1 bis 3 dieses Dokuments).

DE 4437986 offenbart ein Verfahren zur Herstellung einer strukturierten Materialbahn aus einem Bahnmaterial, wobei in einem primären Strukturierungsprozeß eine Wölbstrukturierung mittels einer Stützkontur und einer flexiblen Druckwalze eingebracht wird (Spalte 2, Zeilen 22 bis 62 dieses Dokuments).

DE 4445669 offenbart eine Waschtrommel für eine Waschmaschine, wobei zwischen den Löchern (3) muldenartige Ausprägungen bzw. Erhebungen (4, 4') vorgesehen sind. (S. Spalte 1, Zeilen 49-61, Fig. 1 bis 3 dieses Dokuments).

DE 19951743 offenbart eine Waschtrommel für eine Waschmaschine, wobei nach außen gerichtete Prägungen (4) mit Durchflutungslöchern (3) im Trommelmantel vorgesehen sind (siehe Spalte 2, Zeilen 2-15, Figuren 1-5 dieses Dokuments) In keiner dieser Dokumente werden Details des Verfahrens zur Herstellung der strukturierten Materialbahn gezeigt, welche der jeweiligen Waschtrommel zugrunde liegt.

WO 03/054275 zeigt eine Waschtrommel (1) für eine Waschmaschine, wobei eine Wölbstruktur aus Noppen (6, 8-15), d.H. Kugelkalotten ähnlichen Erhebungen, in die Trommelwandung (3,5) eingebracht ist, wobei auch Flutlöcher (23, 25) an bestimmten Stellen angeordnet sind (Seite 2, Zeilen 8-27, Fig. 1 bis 6 dieses Dokuments). Als Verfahren zur Herstellung der strukturierten Materialbahn, welche als Trommelwandung (5) verwendet wird, ist auf Tiefziehvorgänge bzw. ein Prägewerkzeug mit einer Noppenstruktur Bezug genommen (Seite 2, Zeilen 20-23, Seite 5, Zeilen 22-24 dieses Dokuments). Keiner weiteren Details des Verfahrens werden offenbart.

### Zusammenfassung der Erfindung

Aufgabe der Erfindung ist es, ein Verfahren zur Herstellung einer strukturierten Materialbahn mit hoher Steifigkeit zu schaffen, bei der für verschiedene Einsatzzwecke eine verbesserte Separation eines Fluids von Feststoffen ermöglicht ist.

Es weiterhin Aufgabe der Erfindung, strukturierte Wände, die von einem fluiden Medium durchströmt werden kann, insbesondere für die Trommel einer Wäschebehandlungsmaschine oder für eine Siebwand, eine Filterstütze oder ein Filtermittel oder für eine Verteilungs- oder Dosierungseinheit in der Weise zu schaffen, so dass sie nicht nur eine hohe Steifigkeit bei einem geringen Materialeinsatz besitzt, sondern dass insbesondere trotz einer geringen Anzahl von Löchern eine verbesserte Separation des Fluids von den Feststoffen erfolgt und dass auch gleichzeitig eine Schonung des Feststoffproduktes, beispielsweise von Wäsche, gewährleistet wird.

Aufgabe der Erfindung ist es ferner, das zeitliche Intervall, beispielsweise im Batch-Betrieb eines Filterelementes, durch hydrodynamische und/ oder mechanische Reinigungsmaßnatunen zu verlängern. Schließlich besteht die Aufgabe darin, die Verteilung oder Dosierung von fluiden Medien in der Weise zu verbessern, dass insbesondere die Verweilzeit der fluiden Medien in der Apparatur möglichst gleichmäßig ist. Alle diese Verbesserungen sollen mit einem geringen konstruktiven Aufwand zu realisieren sein.

Diese Aufgabe wird erfindungsgemäß durch Verfahren zum Herstellen einer strukturierten Materialbahn nach dem unabhängigen Anspruch 1 gelöst. Vorteilhafte Ausgestaltungen der Erfindung sind Gegenstand der abhängigen Ansprüche.

So wird die Materialbahn, insbesondere Blechmaterialbahn oder Maschengittermaterialbahn, in der Weise mit mehrdimensionalen Strukturen ausgestattet, dass sich eine hohe Versteifung der erzeugten Wand ergibt und zugleich an allen Orten der Materialbahn ein zur Wand geneigtes Strömungsgefälle für ein fluides Medium entsteht. Zusätzlich wird nach der Erfindung mit Hilfe von mehrdimensionalen Strukturen ein verbesserter Reinigungseffekt zum Entfernen der angelagerten Feststoffpartikel vom strukturierten Filtermittel oder von der strukturierten Siebwand erzielt. Das wird entweder durch einen hydrodynamischen Freispüleffekt oder durch ein mechanisches Hin- und Herschwingen der mehrdimensionalen Wandstrukturen erreicht. Schließlich wird nach der Erfindung mit Hilfe von mehrdimensionalen Strukturen auch erreicht, dass fluide Medien definiert und gleichmäßig aufgeteilt und dosiert werden können, wobei die Verweilzeit durch das geneigte Strömungsgefälle an allen Orten der strukturierten Materialbahn nahezu gleichmäßig ist.

Bei einem Verfahren zum Herstellen einer strukturierten Materialbahn nach einer Ausgestaltung, insbesondere Blechmaterialbahn oder Maschengittermaterialbahn, wird die Materialbahn in der Weise mit mehrdimensionalen Strukturen und Löchern ausgestattet, dass eine hohe Versteifung der Materialbahn erzeugt wird und zugleich in allen Bereichen der strukturierten Materialbahn stets eine geometrische Neigung der strukturierten Wandfläche zu ihrer ursprünglichen ebenen, d. h. noch nicht strukturierten, Wandfläche gebildet wird.

Für das Separieren eines Fluids von Feststoffpartikeln kommt eine mehrdimensional strukturierte Materialbahn zum Einsatz, die in allen Bereichen stets ein Strömungsgefälle für das Fluid zu den Flutlöchern in der Wand aufweist. Das wird dadurch erreicht, dass die strukturierte Materialbahn in jeder ihrer Strukturen stets nur einen tiefsten Punkt besitzt, in dem ein Flutloch angeordnet ist. Das kann in besonderer Weise vorzugsweise dadurch erreicht werden, dass eine dreidimensional facettenförmige oder eine dreidimensional wellenförmige oder eine wölbstrukturierte Materialbahn zum Einsatz kommt, wobei in den tiefsten Orten ihrer mehrdimensionalen Struktur jeweils ein Flutloch angeordnet wird.

Bei den "dreidimensional facettenförmig strukturierten" oder "dreidimensional wellenförmig strukturierten" oder "wölbstrukturierten" Materialbahnen handelt es sich insbesondere um Bänder oder Tafeln aus Metall oder Kunststoff- bzw. Faserverbundstoffe, die mit einer mehrdimensional versteifenden Struktur, mit Strukturgrößen von einigen Millimetern oder Zentimetern, versehen werden. In den verschiedenen Ausführungen handelt es sich um eine isometrische Verformung mit keiner oder nur unwesentlicher Oberflächenvergrößerung der strukturierten Materialbahn.

Diese mehrdimensionalen Strukturen entstehen vorzugsweise besonders materialschonend mit Hilfe eines Beulverfahrens, wobei eine dünnwandige Materialbahn in einer gekrümmten Gestalt auf ihrer Innenseite durch insbesondere linienförmige Elemente abgestützt und von außen mit Druck beaufschlagt wird. Dabei stellen sich auf Basis einer kontrollierten Selbstorganisation oder auf eine technisch modifizierte Weise mit sehr geringem Energieaufwand nach dem "Plopp-Effekt" regelmäßig angeordnete, viereckige oder sechseckige Beul- bzw. Wölbstrukturen (EP 0693 008, EP 0900 131) oder wappenförmige Beul- bzw. Wölbstrukturen (EP 0888 208) oder dreidimensional wellenförmige Strukturen (DE 10 2005 041 516) oder dreidimensional facettenförmige Strukturen (DE 10 2000 41 555) ein. Diese auf der Basis einer kontrollierten Selbstorganisation gebildeten Beulstrukturen können den sogenannten "dissipativen Strukturen" (vgl. I. Prigogine et al.: "Dialog mit der Natur", Pieper Verlag; F. Mirtsch at al.: "Corrugated Sheet Metal on the Basis of Self Organization", First International Industrial Conference Bionic 2004, Hannover Messe, Germany, in: Fortschritt - Berichte VDI Reihe 15, S. 299 - 313) zugeordnet werden. Die auf diese Weise strukturierten Materialbahnen lassen sich dann aus ihrer gekrümmten Form in die ebene Gestalt überführen (DE 198 56 236).

Während die Falten bei der Beul- bzw. Wölbstruktur mit engen Radien aufweisen, sind die Wülste der dreidimensional wellenförmigen Strukturen mit deutlich größeren Radien ausgestattet. Das lässt sich folgendermaßen erklären: Die Beul- bzw. Wölbstrukturen entstehen bei der Überwindung eines Instabilitätspunktes der gekrümmten Materialbahn durch einen Durchschlageffekt, wodurch sich enge Falten, ähnlich wie beim spontanen Umknicken dünner Wände, durch die kinetische Durchschlagenergie einstellen. Bei dem dreidimensional wellenförmigen Strukturieren kommt es ebenfalls bei der Überwindung eines Instabilitätspunktes zu einem Durchschlageffekt, wobei jedoch die kinetische Durchschlagenergie während des Strukturierungsprozesses bereits größtenteils durch eine elastische Zwischenlage gedämpft wird. Weil die dabei entstehenden Wülste mit einem im Vergleich zu den Falten größeren Krümmungsradius ausgestattet sind, ergibt sich gemeinsam mit den eingeschlossenen Kalotten quasi eine Art von mehrdimensionaler Wellengestalt, wobei jedoch eine Halbwellenlänge der Wülste geringer ist als eine Halbwellenlänge der von den Wülsten eingeschlossenen Kalotten. Daher wurde auch der Name "dreidimensionale wellenförmige Struktur" gewählt. Beim Verfahren zum Herstellen dieser dreidimensional wellenförmigen Strukturen werden mit Hilfe einer zusätzlichen elastischen Materiallage, die zwischen der zu strukturierenden Materialbahn und den Stützelementen geführt wird, diese sanft gerundeten Wülste gebildet. Die durch diese Wülste eingeschlossenen Flächenabschnitte der Materialbahn bilden Kalotten, die zumindest annähernd den Abschnitt einer Kugelfläche darstellen. Im Gegensatz dazu entstehen beim Beul- bzw. Wölbstrukturen von Falten eingeschlossenen Mulden, die in der Regel solche etwa kugelförmig gerundeten Kalotten nicht aufweisen. Wegen der sanfteren Rundungen der Wülste wird der Werkstoff der Materialbahn nur sehr wenig beim Strukturieren beansprucht (DE 10 2005 041 516).

Die dreidimensional facettenförmigen Strukturen entstehen mit Hilfe eines sekundären Strukturierungsprozesses dadurch, dass jeweils eine vorzugsweise sechseckige Mulde bzw. Kalotte einer beul- bzw. wölb- oder dreidimensional wellenförmig strukturierten Materialbahn auf ihrer konkaven Seite gegen vorzugsweise drei Stützelemente, die zu einem Sternpunkt zusammenlaufen, gedrückt werden. Dabei sind diese zu einem Sternpunkt zusammenlaufenden Stützelemente nicht in einer Ebene, sondern dreidimensional zu einer quasi pyramidenförmig zusammenlaufenden Spitze so angeordnet, dass sie die Mulde bzw. Kalotte der beul- bzw. wölb- oder dreidimensional wellenförmigen Struktur auf der konkaven Seite der Struktur abstützt. Wenn dann die Mulde bzw. Kalotte der Materialbahn von außen, d.h. von ihrer konvexen Seite, mit Druck beaufschlagt wird, drückt sich die Mulde bzw. Kalotte zwischen den Stützelementen ein. Auf diese Weise entstehen die dreidimensional facettenförmigen Strukturen (DE 10 200041 555) mit ihren räumlich angeordneten ebenen oder nur schwach gekrümmten Facettenflächen, die von Falten eingeschlossen werden. Die ebenen Facettenflächen stellen sich vorzugsweise bei den Materialbahnen aus hochfesten Werkstoffen ein, die eine hohe Streckgrenze besitzen, beispielsweise die Aluminium-Legierung "Titanal" von der Firma Amac (Streckgrenze ca. 580 N/mm²; Zugfestigkeit ca. 640 N/mm²). Die Facettenflächen können auch durch Wülste eingeschlossen werden, indem sowohl beim primären Strukturierungsprozess (dreidimensional wellenförmigen Strukturieren) als auch beim sekundären Strukturierungsprozess jeweils zusätzlich eine elastische Materialbahn zwischen der zu strukturierenden Materialbahn und den Stützelementen geführt wird.

Die Gestalt der gebildeten Facettenflächen wird insbesondere durch die Wahl der Positionierung der Pyramidenspitze in der primärstrukturierten, vorzugsweise sechseckigen (hexagonalen) bestimmt. Wenn die Pyramidenspitze in der Materialbahn, erzeugt mittels drei symmetrisch und sternförmig zu einem Sternpunkt zusammenlaufenden Stützelementen, in der Mitte des Hexagons so angeordnet ist, dass die Falten der Pyramiden jeweils in einen Eckpunkt des Hexagons münden, bilden sich aus Symmetriegründen drei kongruente Facettenflächen, die räumlich angeordnet sind. Nach der Erfindung kann die Pyramidenspitze im Vergleich zu den Eckpunkten des Hexagons auf zweierlei Weise erhöht ausgeführt werden: Fall a: Wenn die Pyramidenspitze außerhalb der Mitte des Hexagons angeordnet wird, bilden sich in der Regel nicht-kongruente Facettenflächen. Wenn die Pyramidenspitze ausgehend von der Mitte des Hexagons in Richtung eines Eckpunktes des Hexagons verschoben wird, wobei zugleich ausschließlich eine einzige Falte der Pyramide mit einem einzigen Eckpunkt des Hexagons zusammenfällt, entstehen jeweils zwei kongruente, räumlich angeordnete Parallelogramme als Facettenflächen und ferner eine sechseckige Facettenfläche, die insbesondere von vier gleichen Falten und zwei weiteren gleichen Falten, wobei die ersten länger als die zweiten sind. Dadurch treten die Pyramidenspitzen geometrisch etwas erhöht aus. Fall b: Die Erhöhung der Pyramidenspitze kann auch dadurch erfolgen, dass bereits die Stützelemente in der Weise zu einem Sternpunkt zusammenlaufen, dass die so gebildete Pyramidenspitze eine vergrößerte Höhe erhält.

Nach der Erfindung wird eine Materialbahn, die von einem fluiden Medium durchströmt werden soll, mit mehrdimensional aneinandergereihten Strukturen versehen, wobei eine Struktur aus einem Flächenabschnitt besteht, welcher von Falten oder Wülsten eingeschlossen wird, und wobei in jeder Struktur ein ausgezeichneter Ort mit einem Loch in der Materialbahn existiert, so dass von jedem anderen Ort dieser Struktur stets eine Neigung zu dem ausgezeichneten Ort entsteht. Dadurch entsteht für ein strömendes Medium von jedem Ort der Materialbahn ein vorzugsweise stetiges Gefälle zum ausgezeichneten Ort der Materialbahn mit dem Flutloch.

Eine Ausführungsform der Erfindung besteht darin, dass eine dreidimensional facettenförmig strukturierte Materialbahn mit vorzugsweise jeweils einem Loch in jeweils einer Pyramidenspitze, die durch vorzugsweise drei räumlich angeordnete Facettenflächen gebildet wird, angeordnet ist.

Eine weitere Ausführungsform der Erfindung besteht darin, dass eine beul- bzw. wölbstrukturierte oder dreidimensional wellenförmig strukturierte Materialbahn so zum Einsatz kommt, dass jeweils am tiefsten Punkt der Mulde bzw. Kalotte jeder einzelnen Struktur ein Flutloch angebracht wird. Auf diese Weise strömt das Fluid beispielsweise beim Separationsprozess auf der Innenseite der Mulde bzw. Kalotte jeder einzelnen Struktur und durchströmt das Flutloch in dem tiefsten Punkt der Mulde bzw. Kalotte.

Eine Ausgestaltung der Erfindung besteht darin, dass die dreidimensional facettenförmig strukturierte Materialbahn mit den Flutlöchern in den Pyramidenspitzen und die dreidimensional wellenförmig strukturierte bzw. wölbstrukturierte Materialbahn mit den Flutlöchern in den Mulden bzw. Kalotten zum Einsatz kommen, wobei die Pyramidenspitzen bzw. die tiefsten Punkte der Mulden bzw. Kalotten jeweils auf dem äußeren Umfang der Waschtrommel angeordnet sind. Auf diese Weise ist sichergestellt, dass die Strömung der Waschlauge beim Schleudern stets eine in radialer Trommelrichtung wirkende Komponente erhält und zugleich am Flutloch die maximale Zentrifugalkraft wirksam ist. Dadurch erfolgt ein verbesserter Entwässerungsgrad der Wäsche, ohne dass die Schleuderdrehzahl oder die Anzahl der Flutlöcher erhöht werden müsste. Dadurch kann die Wäsche mehr geschont und die Steifigkeit der Waschtrommel bei gleicher Wanddicke der Trommel erhöht werden.

Eine weitere Ausgestaltung der Erfindung besteht darin, dass die dreidimensional facettenförmig strukturierte Materialbahn mit den Löchern in den Pyramidenspitzen und die dreidimensional wellenförmig strukturierte bzw. wölbstrukturierte Materialbahn mit den Löchern in den Mulden bzw. Kalotten als eine Siebwand, Siebtrommel oder Filterstütze zum Einsatz kommt. Dadurch kann insbesondere die Separation des Fluids vom Feststoff verbessert werden, weil an jedem Ort der strukturierten Materialbahn eine senkrechte oder geneigte Strömung zur Ebene der noch nicht strukturierten Wand existiert. Die Materialbahn kann eine ebene Gestalt aufweisen; sie kann aber auch gekrümmt sein, vorzugsweise als zylindrische oder konische Trommel, welche von ihrer Innenseite oder von ihrer Außenseite vom Fluid durchströmt wird.

Eine weitere Ausgestaltung der Erfindung besteht darin, dass als Ausgangsmaterial eine bereits vorzugsweise gleichmäßig gelochte Materialbahn mit dreidimensional facettenförmigen oder dreidimensional wellenförmigen Strukturen oder Beul- bzw. Wölbstrukturen ausgestattet wird und diese insbesondere als eine Siebwand, Siebtrommel oder Filterstütze zum Einsatz kommt. Mit zunehmender Anzahl der Löcher in der Materialbahn wird zwar die Durchlässigkeit für fluide Medien erhöht jedoch die Steifigkeit der Materialbahn reduziert. Diese Steifigkeitsverlust infolge der Lochung bei einer nicht-strukturierten (ebenen) Materialbahn kann nach der Erfindung durch die versteifende Wirkung der dreidimensional facettenförmigen oder dreidimensional wellenförmigen Strukturen oder der Beul- bzw. Wölbstrukturen zumindest kompensiert werden.

Nach der Erfindung wird ein Filtermittel mit dreidimensional facettenförmigen oder dreidimensional wellenförmigen oder beul- bzw. wölbstrukturierten Strukturen ausgestattet, damit es so formsteif wird, dass eine Filterstütze nicht benötigt wird. Als Filtermittel können insbesondere enge Maschengitter, vorzugsweise aus Metall, Mischfasern oder Kunstfasern und Glasfasern, die beispielsweise durch Harze stabilisiert werden, zum Einsatz kommen. Diese mehrdimensional strukturierten Filtermittel können beispielsweise in Filterplatten, Filtersieben oder Filtertrommeln eingesetzt werden.

Eine weitere Ausgestaltung der Erfindung sieht vor, dass aus dreidimensional facettenförmig oder dreidimensional wellenförmig oder beul- bzw. wölbstrukturierten Filtermitteln ein Schichtenmodul oder ein Wickelmodul gebildet wird, in dem eine mehrdimensional strukturierte Materialbahn als Filtermittel beispielsweise entweder zu einem ebenen Plattenpaket übereinander geschichtet oder zu einem zylindrischen oder konischen Modul gewickelt wird. Der Vorteil liegt insbesondere darin, dass auf zusätzliche Abstandselemente, welche die einzelnen Filtermittellagen auf Abstand halten und zugleich stabilisieren, verzichtet werden kann.

In einer weiteren Ausgestaltung der Erfindung wird ein dreidimensional facettenförmiges oder dreidimensional wellenförmiges oder beul- bzw. wölbstrukturiertes Filtermittel, an das sich während des Filterbetriebes üblicherweise mit der Zeit Filterkuchen anlagern kann, angewendet, welches sich reinigen lässt, ohne ausgebaut werden zu müssen. Das kann nach drei unterschiedlichen Methoden erfolgen:
1. Durch einen pneumatischen oder hydraulischen Druckstoß gegen die konvexe Seite der Mulde bzw. Kalotte oder gegen die äußere Seite der pyramidenförmigen Ausbuchtungen der Struktur des Filtermittels können sich diese Mulden bzw. Kalotten oder diese pyramidenförmigen Ausbuchtungen deformieren und dabei zumindest etwas abflachen. Sie können sich sogar bei erhöhtem Druckstoß soweit deformieren, dass ein dynamischer Durchschlag der Mulde bzw. Kalotte erfolgt und auf diese Weise der anhaftende Filterkuchen geradezu weggeschleudert wird. Nach vollendetem Druckstoß können die durchgeschlagenen Mulden bzw. Kalotten oder die pyramidenförmigen Ausbuchtungen bei vorzugsweise elastischem Werkstoffverhalten des strukturierten Filtermittels zumindest nahezu in ihre ursprüngliche Gestalt wieder zurückfedern, so dass dieser Reinigungsprozess etwa reversibel abläuft. Hierbei können sich die Wülste (mit sanften Radien) der dreidimensional wellenförmigen und der dreidimensional fäcettenförmigen Strukturen vorteilhafter als die Falten der Wölbstrukturen (mit ihren engen Radien der Falten) verhalten. Daraus resultiert eine höhere Dauerfestigkeit (Wöhlerkurve) bei dynamischer bzw. schwingender Belastung des strukturierten Filtermittels im Reinigungsbetrieb.
2. Das Entfernen des Filterkuchens auf dem strukturierten Filtermittel kann auch durch eine Deformation des strukturierten Filtermittels in ihrer Membranrichtung deformiert wird. Das kann sowohl durch eine statische Zug- oder Druck-Belastung als auch durch eine schwingende Zug- oder Druck-Belastung geschehen. Dabei verhält sich das dreidimensional facettenförmig oder dreidimensional wellenförmig oder beul- bzw. wölbstrukturierte Filtermittel in der Weise kompensatorisch, dass sich die einzelnen Strukturfalten bzw. - wülste und die Mulden bzw. Kalotten quasi wie eine Ziehharmonika etwas hin- und herbewegen lassen, ohne dabei ihre Struktur zu verlieren. Dadurch unterscheiden sie sich grundsätzlich von einer ebenen Materialbahn, die bei einer Zugdehnung leicht reißt und bei einer Stauchung leicht instabil wird, einknickt und versagen kann. Eine vorteilhafte Anwendung ist beispielsweise eine zylindrische oder konische Filterpatrone, die axial statisch oder schwingend deformiert wird. Auf diese Weise können insbesondere die Austauschintervalle der Filterpatrone im Betrieb verlängert werden.
3. Ein reduziertes Anhaften der Feststoffpartikel an dem Filtermittel oder der Filterstütze oder an der Siebwand kann nach der Erfindung auch dadurch erzielt werden, dass sich beim Überströmen der dreidimensional facettenförmig- oder dreidimensional wellenförmig- oder beul- bzw. wölb-strukturierten Materialbahn ein Freispüleffekt einstellt. Das haben experimentelle thermohydraulische Untersuchungen an wölbstrukturierten Wänden gezeigt, wobei sich die Strömungsgrenzschicht bei der Umströmung der Strukturen von der Wand zunächst örtlich ablöst und sich dann wieder an die Wand anlegt. Auf diese Weise entstehen örtliche Turbulenzzonen (F. Mirtsch, W. Roetzel: "Measurement Local Heat Transfer Coefficients on Profiled Walls of Heat Exchangers", ICHMT International Symposium on New Developments in Heat Exchangers, Lisbon, Portugal 6-9, 1993). Solche Turbulenzzonen können nach der Erfindung den Freispüleffekt für eine reduzierte Anlagerung von Feststoffpartikeln an einer mehrdimensional strukturierten Wand bewirken. Hierbei können sich die Wülste mit ihren sanften Rundungen noch vorteilhafter verhalten als die Falten mit ihren engen Radien, weil sogenannte Totwasserzonen im Bereich der engen Falten vermieden oder zumindest reduziert werden.

In einer weiteren Ausgestaltung der Erfindung kann eine dreidimensional facettenförmig oder dreidimensional wellenförmig strukturierte oder eine beul- bzw. wölbstrukturierte Materialbahn, an deren Pyramidenspitze oder tiefsten Orte der Kalotten oder Mulden ein Loch angeordnet ist, vorzugsweise für ein gleichmäßiges Verteilen von fluiden Medien oder für ein Dosieren von fluiden Mengen angewendet werden. Das gleichmäßige Verteilen von fluiden Medien erfolgt beispielsweise in einem Behälter, dessen waagerechter Boden mit dreidimensional facettenförmigen oder dreidimensional wellenförmigen Strukturen oder mit Beul- bzw. Wölbstrukturen und gleich großen Löchern in den tiefsten Orten des strukturierten Bodens angeordnet sind. Dadurch entsteht jeweils in allen Strukturen ein gleiches Strömungsgefälle und somit gleiche Durchflussmengen durch die einzelnen Löcher.

Ferner kann mit Hilfe dieses strukturierten und mit Löchern versehenen Bodens ein gleichmäßiges Dosieren von den Mengen fluider Medien beispielsweise folgendermaßen realisiert werden: Zunächst werden die Löcher, beispielsweise von unten (auf der konvexen Seite) verschlossen. Dann wird der strukturierte Boden von oben so weit angefüllt, dass die Strukturen gerade randvoll gefüllt sind, wobei der Flüssigkeitsspiegel möglichst genau mit der Oberkante der Falten bzw. Wülste abschließt. Das kann dadurch erfolgen, dass die überschüssige fluide Menge, welche die Oberkante der Falten bzw. Mulden zunächst übersteigt, vorzugsweise mit Hilfe eines Abstreifers in Form einer Gummilippe entfernt wird. Nach dem Öffnen der Löcher kann die fluide Menge durch die Löcher abfließen.

Um zu verhindern, dass beim Abfließen des fluiden Mediums kleine Mengen, insbesondere in Form von Tröpfchen, am strukturierten Boden anhaften, wird die Materialbahn vorzugsweise mit einer Antihaft-Beschichtung versehen. Im Fall von wässerigen Medien kann das beispielsweise mit einer Teflonbeschichtung erreicht werden. Es kann aber auch nach der Erfindung eine mit dem Lotus-Effekt ausgestattete Oberfläche verwendet werden, wie experimentelle Untersuchungen gezeigt haben.

Der wesentliche Vorteil der dreidimensional wellenförmigen Strukturen oder der Beul- bzw. Wölbstrukturen besteht hierbei darin, dass diese erzeugt werden, ohne dass die Oberfläche der konkaven Seite der Mulden bzw. Kalotten beim Strukturieren durch ein starres Formwerkzeug berührt wird und somit auch gar nicht beschädigt werden kann. Beim dem dreidimensional facettenförmigen Strukturieren können die ebenen oder nur wenig gekrümmten facettenförmigen Flächen nicht beschädigt werden, weil hierbei ebenfalls keine flächigen Formwerkzeuge existieren. Lediglich im Bereich der Falten, welche zur Pyramidenspitze zusammenlaufen, kann die Oberfläche der Materialbahn durch linienförmige starre Stützelemente etwas beeinträchtigt werden. Wenn jedoch die Facettenstrukturen anstatt der Falten mit Wülsten ausgestattet werden, kommt die Oberfläche an keiner Stelle mit einem starren Stützelement oder starren Formwerkzeug in Kontakt. Deshalb können nach der Erfindung Materialbahnen mit Anti-Haftbeschichtungen oder Anti-Haft-Oberflächen bis hin zu Oberflächen nach dem selbstreinigenden Lotus-Effekt zum Einsatz kommen, wobei die Materialbahn sowohl vor oder nach dem mehrdimensionalen Strukturieren mit diesen Oberflächeneigenschaften ausgestattet werden können. Ein weiterer Vorteil besteht darin, dass eine denkbare Beschädigung dieser Oberfläche mit dem fluid-abweisenden Effekt im üblichen Betriebsfall, wenn überhaupt, ausschließlich im Bereich der Oberkanten der Falten oder Wülste auftreten, wenn beispielsweise ein Abstreifer entlang der Oberkanten geführt wird.

Bei einer Fortbildung der Erfindung ist vorgesehen, dass die Wülste oder Falten gemäß einer oder einer Kombination mehrerer geometrischer Grundformen aus der folgenden Gruppe von geometrischen Grundformen zusammenhängend gebildet sind: Dreieck, Viereck, insbesondere Quadrat, Rechteck, Raute oder Parallelogramm, Fünfeck, Sechseck (Hexagon) und Achteck.

Eine bevorzugte Weiterbildung der Erfindung sieht vor, dass die Strukturierung eine selbstorganisierende Strukturierung ist. Dabei entstehen die Mulden bzw. Kalotten sowie die Falten bzw. Wülste besonders materialschonend.

Die Ausgestaltung der mehrdimensionalen Strukturen kann nach der Erfindung vorzugsweise auch mit Hilfe von geometrisch angepassten Stützelementen, beispielsweise auf einer Walze oder Rolle im kontinuierlichen Betrieb mit Hilfe von geometrisch angepassten Formwerkzeugen, wie Stempel und Matrize oder Stempel und Wirkmedium, insbesondere Elastomer oder fluidisches Medium, erfolgen.

Bei einer zweckmäßigen Ausgestaltung der Erfindung ist vorgesehen, dass die strukturierte Materialbahn einen Werkstoff oder eine Kombination von Werkstoffen, ausgewählt aus der folgenden Gruppe von Werkstoffen bzw. Materialien, ist: Metalle aller Art bis hin zu hochfesten Stahl-Legierungen wie oder Aluminium-Legierungen wie "Titanal" , Kunststoff, faserige Stoffe, insbesondere Papier und Pappe, Fasergewebe und Maschengewebe.

In einer Ausgestaltung der Erfindung zur Herstellung einer versteiften Materialbahn für die Durchströmung von fluiden Medien ist vorgesehen, dass eine Materialbahn, beispielsweise eine Blechbahn, zunächst an allen Orten, wo anschließend die Pyramidenspitzen der dreidimensional facettenförmig strukturierten Materialbahn eingebracht werden, ein Loch erhält, vorzugsweise durch Stanzwerkzeuge oder mit Hilfe eines Lasers. Dann wird die mit Löchern versehene Materialbahn mit Hilfe vorzugsweise einer elastischen Druckwalze gegen eine Stützelementwalze gedrückt und auf diese Weise beul- bzw. wölbstrukturiert. Alternativ wird zusätzlich zwischen der zu strukturierenden Materialbahn und der Stützelementwalze eine elastische Zwischenlage geführt, so dass dreidimensional wellenförmige Strukturen, die Wülste enthalten, gebildet werden. Dabei werden vorzugsweise die Stützelemente auf einer Stützelementwalze in der Weise angeordnet, dass die mehrdimensionalen Strukturen auf der Basis einer Selbstorganisation entstehen. Die Stützelemente können aber auch eine davon etwas abweichende Gestalt besitzen. Anschließend wird die beul- bzw. wölbstrukturierte oder dreidimensional wellenförmig strukturierte und mit Löchern ausgestattete Materialbahn (im Folgenden: primär strukturierte und gelochte Materialbahn) in einem sekundären Strukturierungsverfahren folgendermaßen zu einer dreidimensional facettenförmig strukturierten und mit Löchern versehenen Materialbahn umgeformt. Die primär strukturierte und gelochte Materialbahn wird auf der Seite, wo sich die konkaven Mulden bzw. Kalotten befinden, gegen eine weitere Stützelementwalze gedrückt, indem vorzugsweise eine weitere elastische Druckwalze auf die Gegenseite der Materialbahn, wo sich die konvexen Mulden bzw. Falten befinden, drückt. Auf diese Weise wird in der Mulde bzw. Kalotte der Strukturen, wo sich jeweils auch das Loch befindet, jeweils eine Pyramidenspitze gebildet, die sich aus vorzugsweise drei Facettenflächen zusammensetzt.

In einer weiteren Ausführungsform der Erfindung zur Herstellung einer versteiften Materialbahn, insbesondere für eine Waschmaschinentrommel, wird die mit Löchern und dreidimensional facettenförmigen Strukturen versehene Materialbahn in der Weise zu einer Trommel gebogen, dass die Pyramidenspitzen radial zur Außenseite der Trommel ausgerichtet sind. Dieses Ausrichten der Pyramidenspitzen kann bei den dreidimensional facettenförmigen Strukturen vorzugsweise dadurch erfolgen, dass während des sekundären Strukturierungsprozesses der Anpressdruck der sekundären Stützelementwalze so hoch gewählt wird, dass sich die dreidimensional facettenförmig strukturierte Materialbahn in die sekundäre elastische Druckwalze eindrückt und auf diese Weise eine Krümmung erhält, die vorzugsweise der Krümmung der Trommel entspricht. Man kann aber auch auf diese Weise ein Krümmung der dreidimensional facettenförmig strukturierten Materialbahn herstellen, die noch nicht vollständig die Krümmung der Materialbahn erreicht. In diesem Fall kann die dreidimensional facettenförmig strukturierte Materialbahn anschließend beispielsweise durch Rollbiegen in die gewünschte Krümmung der Trommel umgeformt werden.

In einer weiteren Ausführungsform der Erfindung zur Herstellung einer versteiften Materialbahn, insbesondere für eine Waschmaschinentrommel, wird die mit Löchern und mit dreidimensional wellenförmigen Strukturen versehene Materialbahn in der Weise zu einer Trommel gebogen, dass die tiefsten Orte der Kalotten radial zur Außenseite der Trommel ausgerichtet sind. Das geschieht folgendermaßen: Nach dem dreidimensional wellenförmigen Strukturieren einer Materialbahn sind die tiefsten Orte der Kalotten auf der Innenseite der gekrümmten Materialbahn angeordnet. Durch ein anschließendes Rollbiegen kann die dreidimensional wellenförmig strukturierte Materialbahn in eine Gegenkrümmung übergeführt werden, sodass die tiefsten Orte der Kalotten auf die Außenseite der dreidimensional wellenförmig strukturierten Materialbahn gebracht werden. Diese Möglichkeit zum "Gegenbiegen" stellt eine Besonderheit dar. Denn frühere experimentelle Untersuchungen beim "Gegenbiegen" einer beul- bzw. wölbstrukturierten Materialbahn (gemeint ist ein zu starkes Richten, quasi "Gegenbiegen", aus der ursprünglichen Krümmung des Wölbstrukturierens in die ebene Gestalt und dann in die Gegenkrümmung) hatten gezeigt, dass die Falten der Beul- bzw. Wölbstrukturen beim "Gegenbiegen" instabil werden und leicht einknicken. Es wurde nun überraschenderweise gefunden, dass sich hierbei die Wülste von dreidimensional wellenförmigen Strukturen beim "Gegenbiegen" gutartiger als die Falten der Beul- bzw. Wölbstrukturen verhalten, weil sie nicht so leicht einknicken. Der Grund hierfür ist, dass sich die beim "Gegenbiegen" auftretenden Materialspannungen in den Wülsten (großer Radius) gleichmäßiger verteilen können als in den Falten (kleiner Radius).

Nach einem weiteren Aspekt der Erfindung kann sogar ein "Gegenbiegen" der beul- bzw. wölbstrukturierten Materialbahn nur dann gelingen, wenn das Verhältnis von Strukturtiefe (Tiefe der Mulde) zur Materialdicke gering ist. Die Strukturtiefe ist insbesondere dann gering, wenn auch die Strukturgröße, beim Hexagon gekennzeichnet durch die Schlüsselweite des Sechsecks der Struktur, gering ist.

Beispielhaft werden diese Zusammenhänge an drei experimentellen Untersuchungen erläutert: Fall a: Wenn eine Materialbahn aus duktilem Stahlblech der Dicke 0,6mm mit einer sechseckigen Beul- bzw. Wölbstruktur der Schlüsselweite 50mm und der Strukturtiefe von etwa 4mm versehen wird, beginnen die Falten der Beul- bzw. Wölbstrukturen ab einer "Gegenkrümmung" entsprechend dem Radius von etwa 200mm einzuknicken. Im Gegensatz dazu beginnt die dreidimensional wellenförmig strukturierte Materialbahn bei gleichem Werkstoff, gleicher Dicke, gleicher Strukturtiefe und gleicher Schlüsselweite erst bei einer stärkeren "Gegenkrümmung" entsprechend dem Radius von etwa 150mm einzuknicken. Fall b: Wenn eine Materialbahn aus Aluminiumblech aus herkömmlichem Reflektormaterial der Leuchtenindustrie der Dicke 0,4mm mit einer sechseckigen Beul- bzw. Wölbstruktur der Schlüsselweite 16mm und einer Strukturtiefe von etwa 0,5mm versehen wird, beginnt die strukturierte Materialbahn erst ab einer "Gegenkrümmung" entsprechend dem Radius von etwa 30mm einzuknicken.

Derartige Verfahren zum Herstellen einer mehrdimensional strukturierten Materialbahn werden nach der Erfindung vorzugsweise auf der Basis der Selbstorganisation durchgeführt, wobei der Werkstoff der Materialbahn besonders geschont wird. Man kann nach der Erfindung auch von der aus der Selbstorganisation gefundenen Gestalt der Stützelemente abweichen, indem die Gestalt der Stützelemente nicht durch Selbstorganisation gefunden und verwendet wird.

Wenn der Werkstoff der Materialbahn über genügend Plastifizierungsreserven verfügt, kann nach einem Verfahren der Erfindung zur Herstellung einer mehrdimensional strukturierten Materialbahn zum Durchströmen von fluiden Medien die Materialbahn mit Hilfe einer mechanischen Formwalze bzw. Formmatrize und einem elastischen bzw. fluidischen Wirkmedium oder alternativ mit Hilfe eines Formstempels und einer Matrize mit mehrdimensionalen Strukturen versehen werden, welche es gestatten, dass ein Fluid stets geneigt oder senkrecht zur strukturierten Wand strömt.

In einer weiteren Ausführungsform zur Herstellung einer mehrdimensional strukturierten Materialbahn, insbesondere für Filtermittel, wird eine Materialbahn aus Maschengitter, vorzugsweise aus Edelstahl, in einem entsprechenden Herstellungsverfahren mit dreidimensional facettenförmigen oder dreidimensional wellenförmigen oder beul- bzw. wölbstrukturierten Strukturen versehen, wobei jedoch der Lochvorgang entfallen kann. In einer weiteren Ausführungsform zur Herstellung einer mehrdimensional strukturierten Materialbahn, insbesondere für Filtermittel, wird eine Materialbahn aus Maschengitter mit dreidimensional facettenförmigen oder dreidimensional wellenförmigen oder beul- bzw. wölbstrukturierten Strukturen versehen und dann beispielsweise in der Weise zu einem Rotationskörper gebogen, dass die Mulden, Kalotten oder Pyramidenspitzen radial nach innen weisen. Hierdurch erhält der Rotationskörper eine hohe Formsteifigkeit insbesondere dann, wenn er von außen von einem Fluid durchströmt und dadurch mit Druck beaufschlagt wird. Die Mulden, Kalotten oder Pyramidenspitzen der zu einem Rotationskörper gebogenen Materialbahn können auch radial nach innen gerichtet sein.

### Beschreibung bevorzugter Ausführungsbeispiele der Erfindung

Die Erfindung wird im Folgenden anhand von Ausführungsbeispielen unter Bezugnahme auf Figuren einer Zeichnung näher erläutert. Hierbei zeigen:
- Fig. 1: schematisch eine Vorrichtung zum Herstellen einer dreidimensional facettenförmig strukturierten Materialbahn, an deren Pyramidenspitzen jeweils ein Loch angeordnet ist.

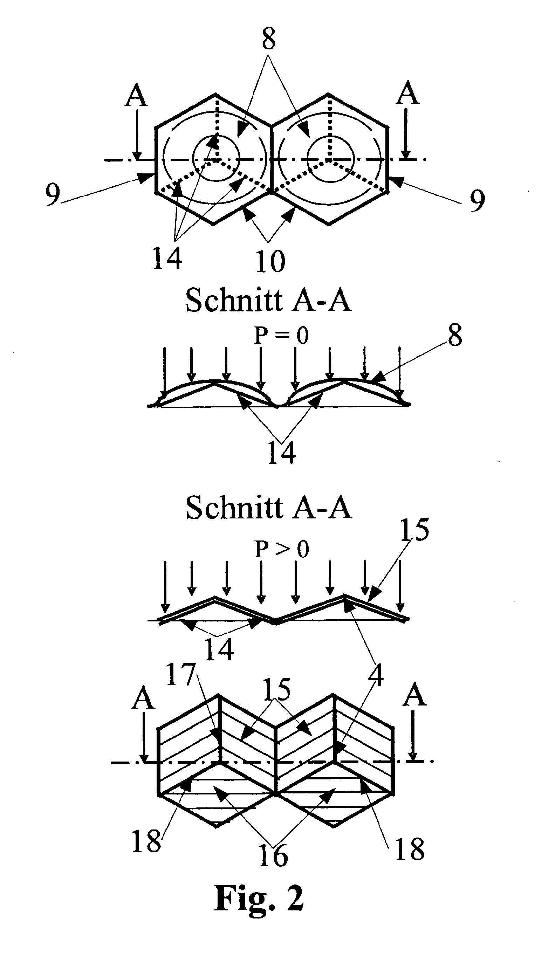

- Fig. 2: schematisch die Gestaltentwicklung von einem hexagonal wölbstrukturierten Wandabschnitt in den beiden oberen Bildern hin zu einem dreidimensional facettenförmig strukturierten Wandabschnitt in den beiden unteren Bildern,

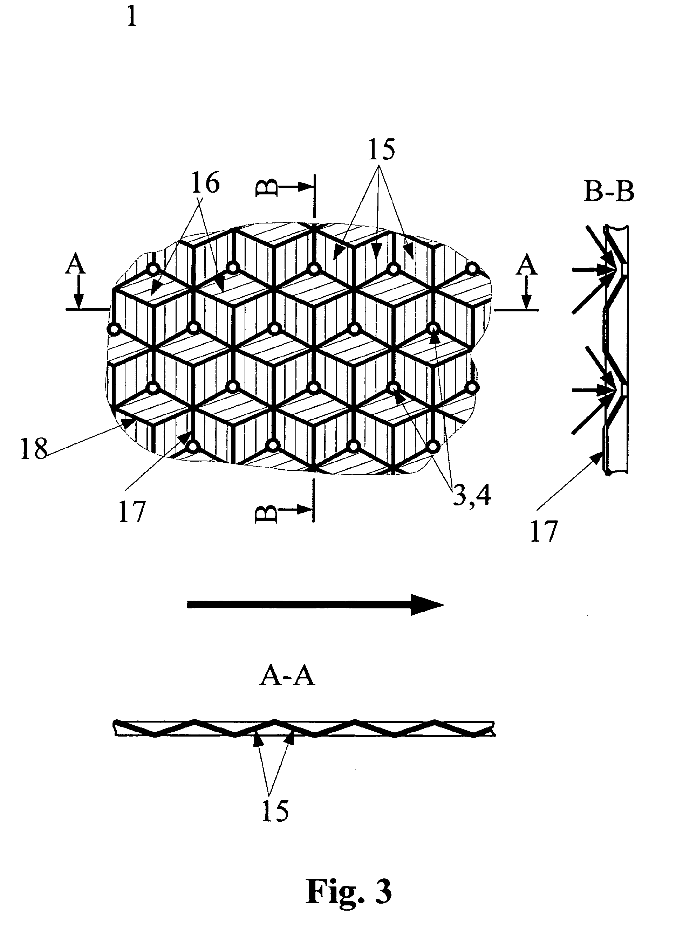

- Fig. 3: schematisch die Draufsicht auf eine dreidimensional facettenförmig strukturierte Materialbahn mit Löchern in den Pyramidenspitzen,

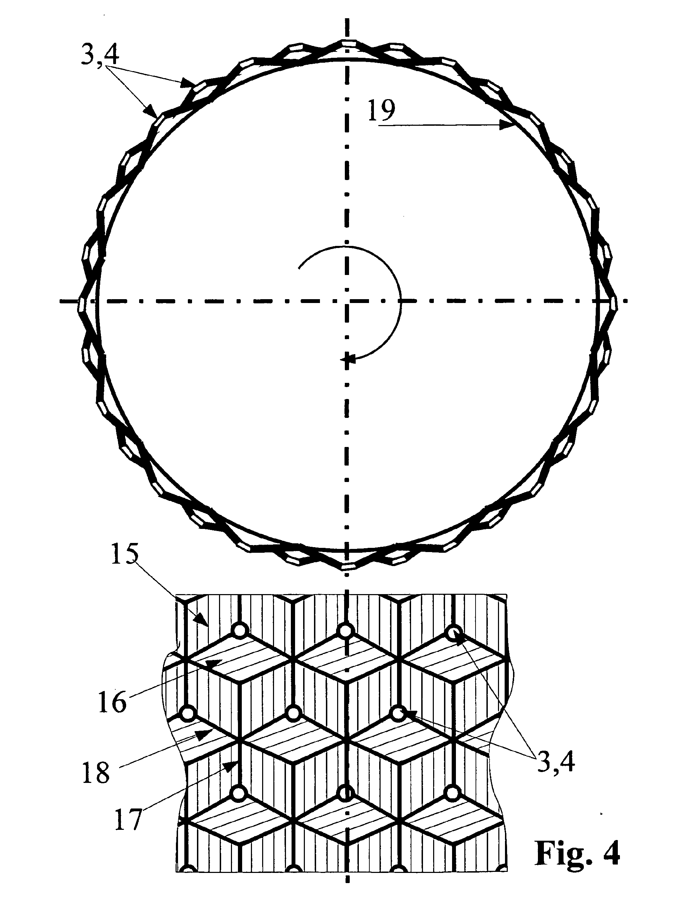

- Fig. 4: schematisch den axialen Querschnitt durch eine dreidimensional facettenförmig strukturierte Trommel, insbesondere für eine Waschmaschine, mit nach außen weisendenden Pyramidenspitzen, in denen die Flutlöcher angeordnet sind, im oberen Bild und einen Ausschnitt auf die Draufsicht auf die Trommel im unteren Bild,

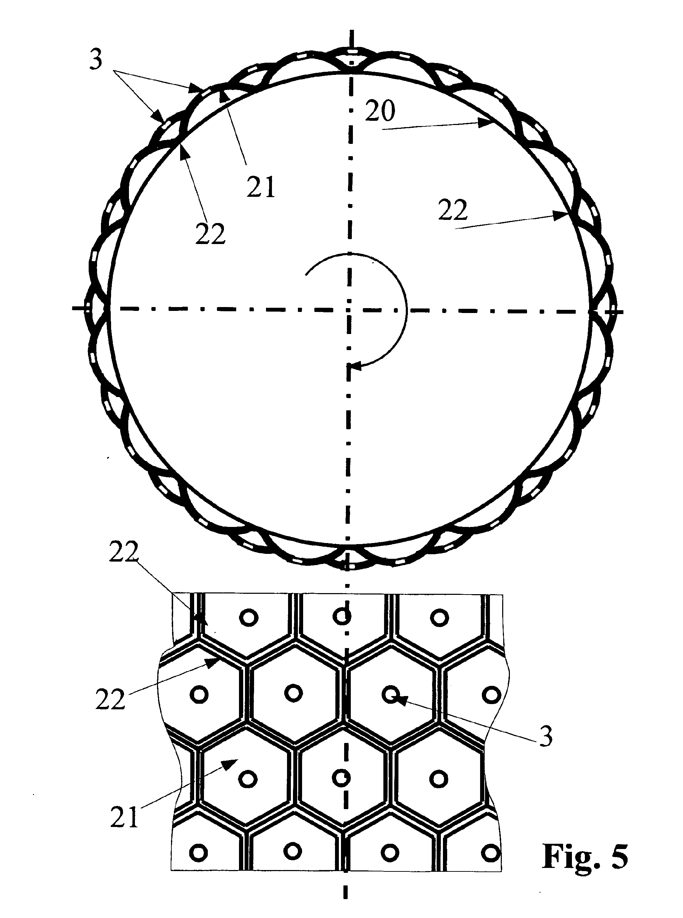

- Fig. 5: schematisch den axialen Querschnitt durch eine wölbstrukturierte oder dreidimensional wellenförmig strukturierte Trommel, insbesondere für eine Waschmaschine, mit nach außen weisendenden Mulden bzw. Kalotten, in deren Mitte jeweils ein Flutloch angeordnet ist, im oberen Bild und einen Ausschnitt auf die Draufsicht auf die Trommel im unteren Bild,

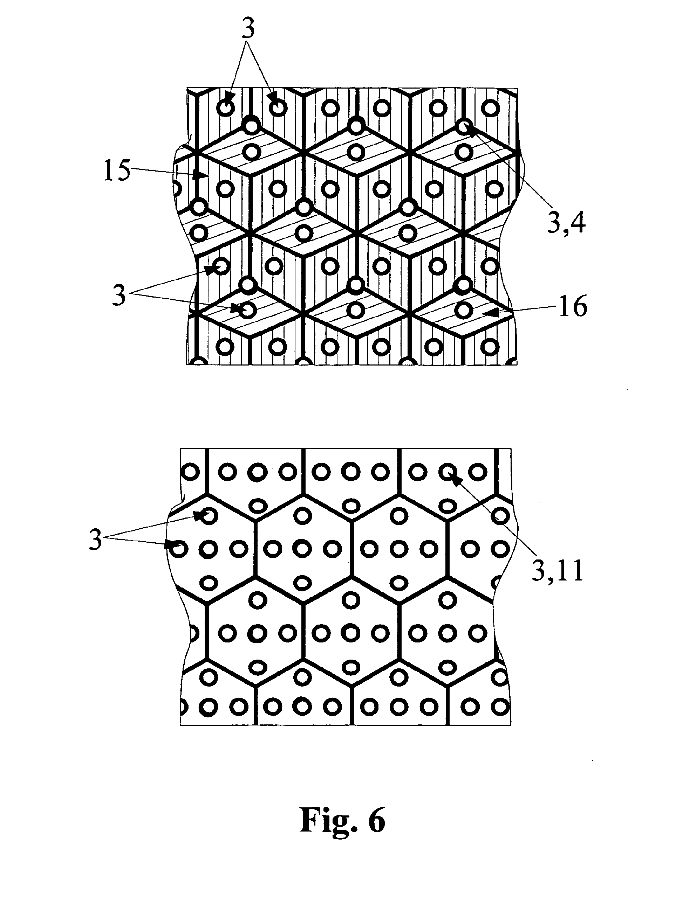

- Fig. 6: schematisch eine Draufsicht auf einen dreidimensional facettenförmig strukturierten Wandabschnitt, in denen je Struktur mehrere Löcher angeordnet sind, im oberen Bild und eine Draufsicht auf eine wölbstrukturierte oder dreidimensional wellenförmig strukturierten Wandabschnitt, in denen je Struktur mehrere Löcher angeordnet sind, im unteren Bild,

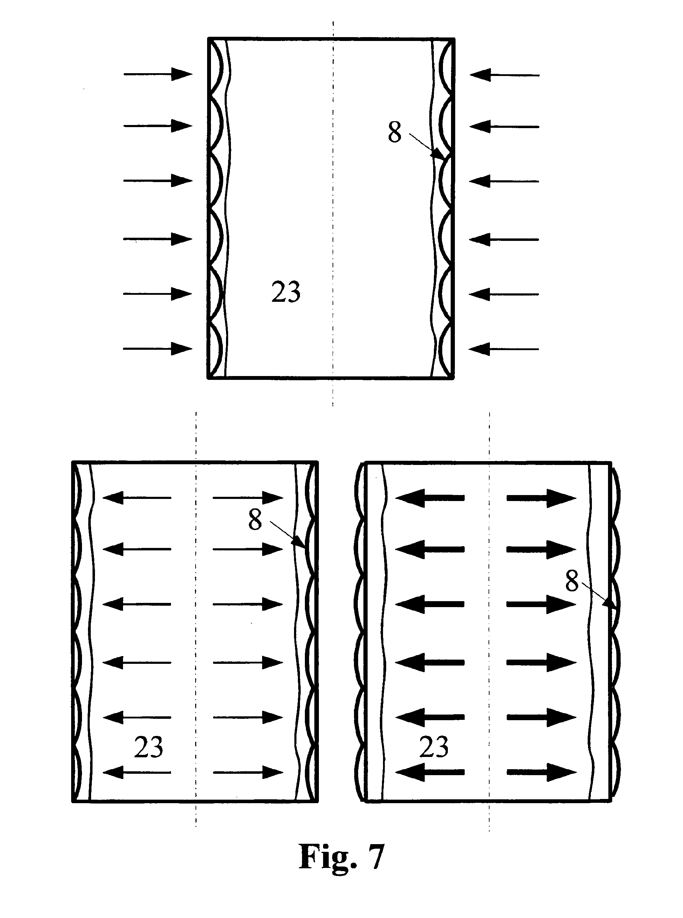

- Fig. 7: schematisch einen Querschnitt durch einen wölbstrukturierten oder dreidimensional wellenförmig strukturierten Zylinder, insbesondere aus Filtermittel, das im oberen Bild von außen radial durchströmt und dadurch mit Druck beaufschlagt wird, und in dem unteren Bild links von innen radial mit einem geringen Druck und in dem unteren Bild rechts von innen radial mit einem erhöhten Druck beaufschlagt wird,

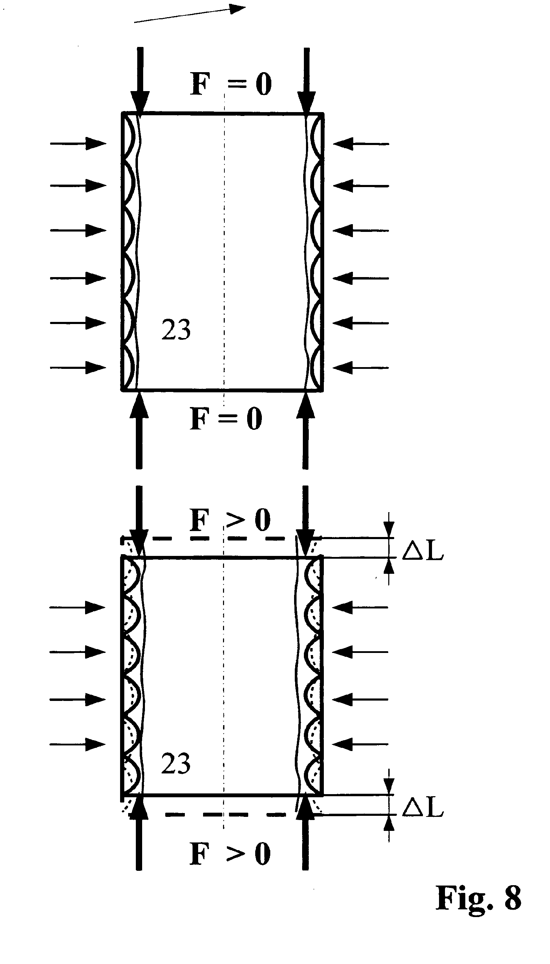

- Fig. 8: schematisch einen Querschnitt durch einen wölbstrukturierten oder dreidimensional wellenförmig strukturierten Zylinder, insbesondere aus Filtermittel, der von außen radial durchströmt und dadurch mit Druck beaufschlagt wird, und bei dem im oberen Bild an seinen beiden Stirnflächen axial noch keine Kraft angreift und bei dem im unteren Bild an seinen beiden Stirnflächen axial eine Kraft mit axialer Stauchung des Zylinders wirksam ist,

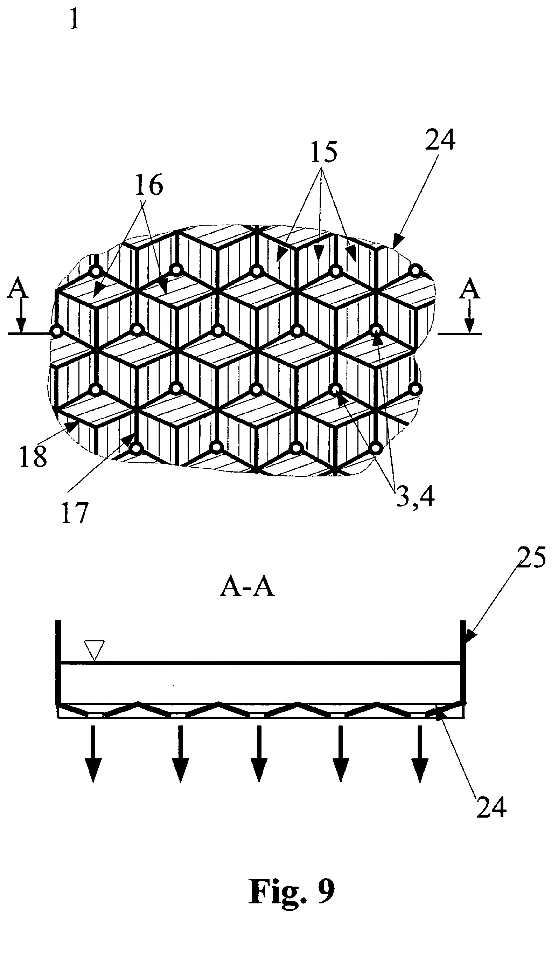

- Fig. 9: schematisch eine Draufsicht auf den Ausschnitt eines dreidimensional facettenförmig strukturierten Verteilerbodens im oberen Bild und einen Querschnitt durch eine Vorrichtung mit einem wölbstrukturierten Verteilerboden im unteren Bild für ein gleichmäßiges Aufteilen von fluiden Medienströmen.

In der Fig. 1 ist schematisch eine Vorrichtung zum Herstellen einer dreidimensional facettenförmig strukturierten Materialbahn 1, an deren Pyramidenspitzen 4 jeweils ein Loch 3 angeordnet ist, dargestellt. Eine ebene Materialbahn 1, insbesondere Blechbahn, wird zunächst mittels einer Lochvorrichtung 2, beispielsweise bestehend aus Dorn und Lochmatrize, an den Stellen mit einem Loch 3 versehen, an denen nachfolgend die Pyramidenspitzen 4 gebildet werden. Mit Hilfe einer elastischen Druckwalze 5 wird dann die Materialbahn 1 gegen die Stützelementwalze 6, auf die hexagonalen Stützelemente 7 angeordnet sind, gedrückt, so dass hexagonale Wölbstrukturen, bestehend aus Mulden 8 und Falten 9 quer zur Laufrichtung der Materialbahn 1 sowie Falten 10 in Laufrichtung der Materialbahn 1, entstehen. In dieser Ansicht sind die Falten 10 des Hexagons lediglich als Sichtkante zu erkennen.

Die Löcher 3 befinden sich am tiefsten Punkt der Mulden 11. Anschließend wird die hexagonal strukturierte Materialbahn mit Hilfe der elastischen Druckwalze 12 gegen die Stützelementwalze 13, auf der jeweils drei Stützelemente 14 zu einem Sternpunkt (in Fig. 2 näher erläutert) zusammenlaufen, gedrückt. In der Ansicht von Fig. 1 ist jeweils nur ein Stützelement 14 der jeweils insgesamt drei Stützelemente sichtbar. Auf diese Weise werden die dreidimensional facettenförmigen Strukturen, in deren Pyramidenspitzen 4 sich die Löcher 3 befinden, erzeugt. In dieser Ansicht von Fig. 1 sind lediglich zwei Teilflächen 15 von jeweils einer facettenförmigen Struktur sichtbar.

Alternativ können anstatt aus den Wölbstrukturen auch aus dreidimensional wellenförmigen Strukturen die dreidimensional facettenförmigen Strukturen gebildet werden (in Fig. 1 nicht explizit dargestellt). Dabei entstehen in analoger Weise die dreidimensional wellenförmigen Strukturen dadurch, dass zusätzlich zwischen der elastischen Druckwalze 5 und der zu strukturierenden Materialbahn 1 eine elastische Zwischenlage (in Fig. 1 nicht explizit dargestellt) geführt wird, wodurch hexagonal angeordnete Wülste 22 (anstatt der Falten 9 und 10) und Kalotten 21 (anstatt der Mulden 8) gebildet werden. Die Wülste 22 und Kalotten 21 werden später in Fig. 5 näher erläutert. Wegen der zusätzlichen elastischen Zwischenlage besitzen die Wülste 22 eine sanftere Rundung (entsprechend großer Krümmungsradius) als die Falten 9 und 10 mit ihrem kleinen Krümmungsradius. Dabei entstehen anstatt der Mulden 8 die Kalotten 21, welche eher einem Kugelschnitt entsprechen als die Mulde 8.

In der Fig. 2 wird schematisch näher erläutert, wie aus der hexagonalen Wölbstruktur eine dreidimensional facettenförmig strukturierte Materialbahn entsteht. Im obersten Bild sind die Mulden 8 und die Falten 9 und 10 der Wölbstruktur dargestellt, wobei die Mulden 8 auf ihrer konkaven Seite jeweils durch drei zu einem Sternpunkt zusammenlaufenden Stützelemente 14 abgestützt werden.

In der oberen Schnittansicht A-A ist die Anordnung der Stützelemente 14 (unterhalb der Mulden 8) vor der Druckbeaufschlagung ( P = 0 ) dargestellt. In der unteren Schnittansicht A-A ist die Anordnung der Stützelemente 14 (unterhalb der Mulden 8) nach der Druckbeaufschlagung ( P > 0 ) dargestellt, wobei sich die Stützelemente 14 und die gebildeten Flächen 15 der dreidimensional facettenförmig strukturierten Materialbahn einander berühren. Dabei geben die senkrechten Pfeile die Richtung des Druckes infolge der elastischen Druckwalze 12 (in Fig. 1) an. Dadurch entstehen die Falten 17 und 18 der facettenförmigen Struktur. Im unteren Bild von Fig. 2 ist die fertige dreidimensional facettenförmig strukturierte Materialbahn mit ihren ebenen oder nur schwach gekrümmten Facettenflächen 15 und 16 dargestellt. Die Facettenflächen 16 befinden sich auf einer gemeinsamen Ebene, während die Facettenflächen 15 sich auf zwei unterschiedlichen Ebenen befinden.

In Fig. 2 bildet der Sternpunkt, der durch die drei zusammenlaufenden Stützelemente 14 hervorgerufenen wird, die Pyramidenspitze 4 der dreidimensional facettenförmigen Struktur. Dieser Sternpunkt ist in Fig. 2 in der Mitte der hexagonalen Struktur angeordnet. Der Sternpunkt kann aber auch in der Mitte oder außerhalb einer dreieckigen, viereckigen, wie rechteckigen, quadratischen, rhombenförmigen, parallelogrammförmigen, fünfeckigen, sechseckigen, achteckigen oder wappenförmigen Struktur liegen, indem die Stützelemente 14 entsprechend angeordnet werden. Mit wappenförmigen Strukturen ist gemeint, dass anstatt der geraden Stützelemente 7 bzw. 14 geschwungene Stützelemente und daraus resultierende geschwungene Falten gebildet werden. Dadurch ändert sich auch die Geometrie der Facettenflächen entsprechend. Die Bildung von dreidimensional facettenförmigen Strukturen kann in analoger Weise auch dadurch erfolgen, dass anstatt der hexagonalen Wölbstrukturen, welche aus Falten und Mulden bestehen, dreidimensional wellenförmigen Strukturen, die aus Wülsten und Kalotten bestehen, zum Einsatz kommen. Dadurch entstehen dreidimensional facettenförmige Strukturen mit sanfter ausgebildeten Konturen. Diese sind in Fig. 2 nicht explizit dargestellt.

In der Fig. 3 ist schematisch eine Draufsicht auf eine dreidimensional facettenförmig strukturierte Materialbahn mit Löchern 3, die sich in den Pyramidenspitzen 4 befinden, dargestellt. Im Schnitt A-A sind die räumlich zueinander geneigten Facettenflächen 15 dargestellt. Der Schnitt B-B zeigt die Anordnung der Falten 17 der Facettenstruktur mit dem angeordneten Loch 3 in der Pyramidenspitze 4 in Fertigungsrichtung (siehe großer Pfeil) an. Die kleinen Pfeile im Schnitt B-B geben schematisch die Strömungsrichtung zur Pyramidenspitze hin an. Es existiert in jeder Facettenstruktur stets ein Strömungsgefälle zum Loch in der Pyramidenspitze.

In der Fig. 4 wird schematisch im oberen Bild der axiale Querschnitt durch eine dreidimensional facettenförmig strukturierte Trommel 19, beispielsweise für eine Waschmaschine, dargestellt. Die Löcher 3 befinden sich in den Pyramidenspitzen 4, die auf dem äußeren Radius der Trommelwand angeordnet sind. Dadurch erhält ein Fluid innerhalb der rotierenden Trommel 19 am Ort der Löcher nicht nur die größte Zentrifugalbeschleunigung bei gegebener Trommeldrehzahl, sondern gleichzeitig an jedem Ort der Trommel-Innenwand stets eine nach außen radial gerichtete Strömungskomponente. Dadurch wird der Abscheidegrad des Fluids vom Feststoff verbessert. Im unteren Bild wird die Draufsicht auf die dreidimensional facettenförmig strukturierte Trommelwand in einer abgewickelten Ansicht dargestellt.

In der Fig. 5 wird schematisch im oberen Bild der axiale Querschnitt durch eine dreidimensional wellenförmig strukturierte Trommel 20, beispielsweise für eine Waschmaschine, dargestellt. Die Löcher 3 befinden sich am tiefsten Ort der Kalotten 21, die sich auf dem äußeren Radius der Trommelwand befinden. Die Wülste 22 der dreidimensional wellenförmig strukturierten Trommel weisen im Gegensatz zu den Falten der Beul- bzw. Wölbstrukturen eine sanfte Rundung auf und lassen sich deshalb auch sanfter in die Gestalt der Trommel 20 biegen, wobei die Kalotten 21 nach außen und die Wülste 22 nach innen weisen. Dadurch erhält das Fluid in der rotierenden Trommel 20 am Ort der Löcher 3 nicht nur die größte Zentrifugalbeschleunigung bei gegebener Trommeldrehzahl, sondern gleichzeitig an jedem Ort der Trommel-Innenwand stets eine nach außen radial gerichtete Strömungskomponente.

In der Fig. 6 ist schematisch im oberen Bild eine Draufsicht auf den Wandabschnitt einer dreidimensional facettenförmig strukturierten Materialbahn, in der nicht nur Löcher 3 in den Pyramidenspitzen 4, sondern auch Löcher 3 in den Facettenflächen 15 und 16 angeordnet sind, dargestellt. Im unteren Bild ist schematisch eine Draufsicht auf den Wandabschnitt einer wölbstrukturierten Materialbahn dargestellt, wobei zusätzlich zu den Löchern 3 am tiefsten Ort der Mulde 11 auch an weiteren Orten der Mulde Löcher 3 angeordnet sind, dargestellt. Diese Lochanordnungen sind beispielhaft. Es können auch an anderen Orten der Facettenflächen und der Mulden weitere Löcher 3 angebracht werden. Analoge Anordnungen von Löchern 3 ergeben sich, wenn - anstatt der Falten 17 und 18 der dreidimensional facettenförmigen Strukturen - Wülste 22 zum Einsatz kommen oder wenn in analoger Weise - anstatt der Falten 9 und 10 und der Mulden 8 der Wölbstrukturen - Wülste 22 und Kalotten 21 zum Einsatz kommen. Diese Anordnungen sind in Fig. 6 nicht explizit dargestellt.

In der Fig. 7 ist schematisch in drei Bildern der Querschnitt eines zylindrischen wölbstrukturierten Filtermittels 23 dargestellt. Die Pfeile in diesen Bildern stellen die Strömungsrichtung des Fluids und damit auch die Richtung des wirksamen Druckes dar. Im oberen Bild ist der normale Betriebszustand des Filtermittels 23 dargestellt, wobei das zu filternde fluide Medium von außen nach innen das Filtermittel 23, beispielsweise aus maschenartigem Edelstahl, durchströmt, und dadurch das Filtermittel 23 auf seiner Außenseite mit Druck beaufschlagt wird. Das zylindrische, wölbstrukturierte Filtermittel 23 verhält sich besonders formsteif, weil diese Belastungsrichtung identisch mit der Drucksbelastung ist, durch welche der Beul- bzw. Wölbstrukturierungsprozess initiiert und durchgeführt wurde. Obwohl die Stützelemente des Beul- bzw. Wölbstrukturierungsprozesses nicht mehr vorhanden sein müssen, wirken die bereits vorhandenen Falten 9 und 10 quasi selbstversteifend gegenüber äußerer Druckbelastung. Die beiden unteren Bilder zeigen schematisch die Deformation des beul- bzw. wölbstrukturierten Filtermittels 23, wenn durch Strömungsumkehr (siehe Pfeile) die Druckbelastung von innen her erfolgt und infolgedessen der auf der Außenseite des Filtermittels 23 angelagerte Feststoff oder Filterkuchen (in Fig. 7 nicht explizit dargestellt) entfernt werden kann. Im unteren Bild links ist die innere Druckbeaufschlagung noch gering, so dass die Mulden 8 der Beul- bzw. Wölbstrukturen lediglich etwas abgeflacht werden. Im unteren Bild rechts ist die innere Druckbeaufschlagung so groß, dass die Mulden 8 der Beul- bzw. Wölbstrukturen von innen nach außen durchschlagen und infolgedessen der außen angelagerte Feststoff oder Filterkuchen beschleunigt abgeworfen werden kann. Bei erneuter Strömungsumkehrung zur Wiederherstellung des normalen Betriebszustandes nimmt das Filtermittel 23 seine ursprünglich Gestalt vollkommen oder zumindest angenähert wieder an, analog zum oberen Bild. Alternativ können in Fig. 7 anstatt der Beul- bzw. Wölbstrukturen dreidimensional wellenförmige Strukturen zum Einsatz kommen. Die Anwendung dieser dreidimensional wellenförmigen Strukturen mit ihren sanft gerundeten Wülsten 22 (in Fig. 7 nicht explizit dargestellt) ist insbesondere dann vorteilhaft, wenn ein dynamisches Durchschlagen der Kalotten 21 gemäß der Anordnung des Bildes unten rechts auftritt und dabei der Werkstoff des Filtermittels nur wenig belastet werden soll. Auf diese Weise lässt sich die Dauerschwingfestigkeit (Wöhlerkurve) des strukturierten Filtermittels erheblich verbessern. In einer weiteren Ausführung, die in Fig. 7 ebenfalls nicht explizit dargestellt ist, können die Stützelemente 7, die zur Erzeugung der beul- bzw. wölbstrukturierten oder dreidimensional wellenförmig strukturierten Materialbahn des Filtermittels 23 zum Einsatz kamen, im Filtermittel 23 als Filterstütze verbleiben. Auf diese Weise kann man die äußere Druckbeaufschlagung, beispielsweise durch höhere Strömungsgeschwindigkeiten und/oder infolge eines dickeren Filterkuchens, erheblich erhöhen. Auf diese Weise lässt sich das Zeitintervall zwischen zwei Reinigungsvorgängen verlängern und/oder die Dicke der Filtermittelwand reduzieren. So können auch Maschengitter oder Gewebe aus Materialien, wie Textilien oder anorganische Fasergewebe, die eine geringe Formsteifigkeit aufweisen, zum Einsatz kommen. In einer weiteren Ausführung, die ebenfalls in Fig. 7 nicht explizit dargestellt ist, sind Siebwände und Filterstützen mit Beul- bzw. Wölbstrukturen oder mit dreidimensional wellenförmigen oder dreidimensional facettenförmigen Strukturen ausgestattet.

In der Fig. 8 ist schematisch in zwei Bildern der Querschnitt eines zylindrischen beul- bzw. wölbstrukturierten Filtermittels 23 dargestellt. Die horizontalen Pfeile in diesen beiden Bildern stellen beispielsweise eine einheitliche Strömungsrichtung eines Fluids im normalen Filterbetrieb dar, wobei sich die Richtung des wirksamen Druckes nicht verändert. Im oberen Bild ist dieser normale Betriebszustand des Filtermittels dargestellt, wobei das zu filternde fluide Medium von außen nach innen das Filtermittel 23, vorzugsweise aus einem elastischen Maschengitter aus Edelstahl, durchströmt und wobei sich auf der Außenseite des Filtermittels 23 Feststoffpartikel in Form von Filterkuchen absetzen kann. Letzterer ist in Fig. 8 nicht explizit dargestellt.

Das beul- bzw. wölbstrukturierte Filtermittel 23 kann in axialer Richtung deformiert werden, ohne dabei einzuknicken, weil es aufgrund seiner mehrdimensionalen und versetzten Beul- bzw. Wölbstrukturen einen kompensatorischen Effekt besitzt. Durch eine axiale Last (F > 0) wird das beul- bzw. wölbstrukturierte Filtermittel 23 an seinen beiden Enden um eine Längendifferenz ΔL verkürzt und nach dem Entfernen der axialen Last wieder vollständig oder zumindest angenähert zurückverformt. Im Gegensatz dazu würde ein nicht- strukturiertes Filtermittel bei einer axialen Deformation leicht instabil werden und einknicken. Diese axiale Instabilität tritt insbesondere bei einem beul- bzw. wölbstrukturierten, zylindrischen Filtermittel 23, vorzugsweise aus Maschengittern oder Gewebe nicht auf, weil sich eine beul- bzw. wölbstrukturierte Materialbahn in ihrer Wandrichtung aufgrund ihrer Strukturen bereits kompensatorisch verhält und weil darüber hinaus bei Maschengittern und Geweben aufgrund der Fähigkeit, dass sich ihre Fasern gegeneinander verschränken können, diese kompensatorische Wirkung noch verstärkt wird. Dabei wird die hohe radiale Formsteifigkeit eines zylindrischen oder konischen oder sonstigen vorzugsweise rotationssymmetrisch gekrümmten beul- bzw. wölbstrukturierten Filtermittels nicht beeinträchtigt.

Die axiale Deformation des beul- bzw. wölbstrukturierten Filtermittels 23 kann durch eine intermittierende oder sogar schwingende Last (F > 0) realisiert werden. Dass kann sogar geschehen, ohne dabei den eigentlichen Filterbetrieb zu unterbrechen. Alternativ kann anstatt des beul- bzw. wölbstrukturierten Filtermittels 23 auch ein dreidimensional wellenförmig strukturiertes Filtermittel insbesondere dann zum Einsatz kommen, wenn eine hohe Dauerschwingfestigkeit des verwendeten Werkstoffes erreicht werden soll. In einer weiteren Ausführung, welche in Fig. 8 nicht explizit dargestellt ist, lassen sich auch dreidimensional facettenförmig strukturierte Filtermittel, die mit Falten oder Wülsten ausgestattet sein können, einsetzten, weil sich diese ebenfalls kompensatorisch verhalten.

Darüber hinaus wird bei der Überströmung der dreidimensional facettenförmig strukturierten Wände die wandnahe Strömung infolge der zueinander geneigten Facettenflächen 15 verstärkt hin und her gelenkt. Dadurch wird der Freispüleffekt verstärkt. In einer weiteren Ausführung, die ebenfalls in Fig. 8 nicht explizit dargestellt ist, sind Siebwände und Filterstützen mit Beul- bzw. Wölbstrukturen oder mit dreidimensional wellenförmigen oder dreidimensional facettenförmigen Strukturen ausgestattet.

In der Fig. 9 ist schematisch eine Draufsicht auf den Ausschnitt eines dreidimensional facettenförmig strukturierten Verteilerbodens 24 im oberen Bild und ein Querschnitt durch ein Element 25 mit dem dreidimensional facettenförmig strukturierten Verteilerboden 24 im unteren Bild für ein gleichmäßiges Aufteilen von fluiden Medienströmen dargestellt. Die senkrechten Pfeile im unteren Bild geben die Strömungsrichtung der aufgeteilten fluiden Mengenströme an, die explizit nicht dargestellt sind. In einer weiteren Ausgestaltung, die in Fig. nicht explizit dargestellt ist, wird das in Fig. 9 dargestellte Element modifiziert. Zunächst werden die Löcher im unteren Bild verschlossen und der strukturierte Boden von oben nur soweit ausgefüllt, dass die Oberfläche des fluiden Mediums gerade mit der Oberkante der Falten bzw. Wülste der facettenförmig strukturierten Materialbahn abschließt. Das geschieht vorzugsweise dadurch, dass die überschüssige fluide Menge mit Hilfe eines Abstreifers entfernt wird, bevor die Löcher im strukturierten Verteilerboden 24 geöffnet werden.

Die in der vorstehenden Beschreibung, den Ansprüchen und der Zeichnung offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Herstellen einer strukturierten Materialbahn aus einem Bahnmaterial, wobei das Verfahren die folgenden Schritte umfasst:
- Bereitstellen eines Bahnmaterials (1),
- Ausbilden von Löchern (3) in dem Bahnmaterial (1),
- Ausführen eines primären Strukturierungsprozesses, bei dem eine dreidimensionale Strukturierung des Bahnmaterials mit Wülsten oder Falten (9, 10) sowie Strukturen in von den Wülsten/Falten (9, 10) eingeschlossenen Flächenabschnitten hergestellt wird, nämlich von den Falten (9, 10) umgebenen Mulden (8) im Falle einer Wölbstruktur und von den Wülsten (9, 10) umgebenen Kalotten (21) im Fall einer dreidimensionalen wellenförmigen Struktur, und
- Ausführen eines sekundären Strukturierungsprozesses,
**dadurch gekennzeichnet, dass**
beim Ausführen des sekundären Strukturierungsprozesses, bei dem eine dreidimensional facettenförmige Strukturierung des Bahnmaterials mit räumlich angeordneten ebenen oder nur schwach gekrümmten Facettenflächen (15, 16) in den eingeschlossenen Flächenabschnitten hergestellt wird, indem die Mulden /Kalotten (8, 21) auf ihrer konvexen Seite mit Druck beaufschlagt und auf Ihrer konkaven Seite gegen zu einem Sternpunkt zusammenlaufende Stützelemente (14) gedrückt werden, wodurch sich die Mulden (8) / Kalotten (21) zwischen den Stützelementen eindrücken,
wobei eines der Löcher (3) jeweils in einem ausgezeichneten Ort (4), nämlich am tiefsten Ort (4), in jeder der als Facettenfläche (15, 16) gebildeten Strukturen in den eingeschlossenen Flächenabschnitten angeordnet ist und wobei der eingeschlossene Flächenabschnitt in jedem anderen Ort des eingeschlossenen Flächenabschnitts mit einer Neigung zu dem ausgezeichneten Ort hin gebildet wird.

2. Verfahren nach Anspruch 1, **dadurch gekennzeichnet, dass** die dreidimensional Strukturierung des Bahnmaterials bei dem primären Strukturierungsprozess mittels einer kontrollierten Selbstorganisation hergestellt wird.

3. Verfahren nach Anspruch 1 oder 2, **dadurch gekennzeichnet, dass** die Mulden (8) / Kalotten (21) auf ihrer konvexen Seite mit einer elastischen Druckwalze (5) oder mittels eines fluidischen Wirkmediums mit Druck beaufschlagt werden.

4. Verfahren nach mindestens einem der vorangehenden Ansprüche, **dadurch gekennzeichnet, dass** die Facettenflächen (15, 16) mit einer pyramidenförmigen Gestalt gebildet werden.

5. Verfahren nach Anspruch 4, **dadurch gekennzeichnet, dass** eine Pyramidenspitze (4) erhöht ausgeführt wird.

6. Verfahren nach mindestens einem der vorangehenden Ansprüche, **dadurch gekennzeichnet, dass** die Facettenflächen (15, 16) jeweils mit mehreren Löchern (3) ausgestattet werden.

7. Verfahren nach mindestens einem der vorangehenden Ansprüche, **dadurch gekennzeichnet, dass** das mit der dreidimensional facettenförmigen Strukturierung hergestellte Bahnmaterial (1) zu einer Trommelgestalt (19, 20) gebogen wird, derart, dass die Löcher (3) in dem ausgezeichneten Ort (4) der Facettenflächen (15, 16) gemeinsam am äußeren Radius oder am inneren Radius der Trommelgestalt (19, 20) angeordnet werden.

8. Verfahren nach mindestens einem der vorangehenden Ansprüche, **dadurch gekennzeichnet, dass** das mit der dreidimensional facettenförmigen Strukturierung hergestellte Bahnmaterial (1) einknickfrei in eine gekrümmte Gestalt umgeformt wird.

9. Verfahren nach mindestens einem der vorangehenden Ansprüche, **dadurch gekennzeichnet, dass** das Bahnmaterial als ein Maschengitter-, Gewebe-, oder Textilmaterial bereitgestellt wird.

10. Verfahren nach mindestens einem der vorangehenden Ansprüche, **dadurch gekennzeichnet, dass** das Bahnmaterial als ein Material ausgewählt aus der folgenden Gruppe von Materialien bereitgestellt wird: Metall-, Kunststoff-, Natur-, Carbon-, Glasfasermaterial, Pappe und Papier.

11. Verfahren nach mindestens einem der vorangehenden Ansprüche, **dadurch gekennzeichnet, dass** auf der Oberfläche des Bahnmaterials eine Anti-Haftbeschichtung oder eine Anti-Haft-Oberfläche, insbesondere nach Art eines Lotus-Effektes, gebildet wird, wobei dies vor oder nach dem Ausbilden der Löcher oder vor oder nach dem dreidimensionalen Strukturieren ausgeführt wird.

12. Verwendung eines Verfahrens nach mindestens einem der vorangehenden Ansprüche zur Herstellung einer strukturierten Materialbahn als Wandung einer Trommel einer Wäschebehandlungsmaschine.

13. Verwendung eines Verfahrens nach mindestens einem der Ansprüche 1 bis 11 zur Herstellung einer strukturierten Materialbahn als eine ebene oder gekrümmte Siebwand, beispielsweise für die Papier- und Pappenherstellung, oder eine Filterstütze.

14. Verwendung eines Verfahrens nach mindestens einem der Ansprüche 1 bis 11 zur Herstellung einer strukturierten Materialbahn als ein ebenes oder gekrümmtes Filtermittel (23).

15. Verwendung eines Verfahrens nach mindestens einem der Ansprüche 1 bis 11 zur Herstellung einer strukturierten Materialbahn für ein Verteilelement, insbesondere für die Glasfaserherstellung.

16. Verwendung eines Verfahrens nach mindestens einem der Ansprüche 1 bis 11 zur Herstellung einer strukturierten Materialbahn für eine Dosiervorrichtung, insbesondere für fluide Medien.

## Claims

1. Method for producing a structured material sheet from a sheet material, the method comprising the following steps:
- providing a sheet material (1),
- forming holes (3) in the sheet material (1),
- performing a primary structuring process, in which a three-dimensional structuring of the sheet material is produced with beads or folds (9, 10) as well as structures in surface portions enclosed by the beads/folds (9, 10), namely troughs (8) surrounded by the folds (9, 10) in the case of a vault structure and calottes (21) surrounded by the beads (9, 10) in the case of a three-dimensional wavy structure, and
- performing a secondary structuring process,
**characterized in that**
when performing the secondary structuring process, a three-dimensionally faceted structuring of the sheet material is produced with spatially arranged planar or only slightly curved facet areas (15, 16) in the enclosed surface portions, **in that** the troughs/calottes (8, 21) are subjected to pressure on their convex side and are pressed on their concave side against supporting elements (14) converging to the point of a star, whereby the troughs (8)/calottes (21) are pressed in between the supporting elements,
one of the holes (3) being respectively arranged in a dedicated location (4), namely at the lowest location (4), in each of the structures formed as a facet area (15, 16) in the enclosed surface portions, and the enclosed surface portion being formed at every other location of the enclosed surface portion with a slope towards the dedicated location.

2. Method according to Claim 1, **characterized in that** the three-dimensional structuring of the sheet material in the case of the primary structuring process is produced by means of a controlled self-organization.

3. Method according to Claim 1 or 2, **characterized in that** the troughs (8)/calottes (21) are subjected to pressure on their convex side by an elastic pressure roller (5) or by means of a fluidic active medium.

4. Method according to at least one of the preceding claims, **characterized in that** the facet areas (15, 16) are formed by a pyramidal shape.

5. Method according to Claim 4, **characterized in that** a pyramid tip (4) is made in an elevated form.

6. Method according to at least one of the preceding claims, **characterized in that** the facet areas (15, 16) are respectively provided with a number of holes (3).

7. Method according to at least one of the preceding claims, **characterized in that** the sheet material (1) produced with the three-dimensionally faceted structuring is bent into a drum shape (19, 20) in such a way that the holes (3) at the dedicated location (4) of the facet areas (15, 16) are arranged together at the outer radius or at the inner radius of the drum shape (19, 20).

8. Method according to at least one of the preceding claims, **characterized in that** the sheet material (1) produced with the three-dimensionally faceted structuring is formed into a curved shape free of creases.

9. Method according to at least one of the preceding claims, **characterized in that** the sheet material is provided as netting or fabric or textile material.

10. Method according to at least one of the preceding claims, **characterized in that** the sheet material is provided as a material selected from the following group of materials: metal-, plastic-, natural-, carbon- or glass-fibre material, cardboard and paper.

11. Method according to at least one of the preceding claims, **characterized in that** a nonstick coating or a nonstick surface, in particular in the manner of a lotus effect, is formed on the surface of the sheet material, this being performed before or after the forming of the holes or before or after the three-dimensional structuring.

12. Use of a method according to at least one of the preceding claims for producing a structured material sheet as a wall of a drum of a laundry treatment machine.

13. Use of a method according to at least one of Claims 1 to 11 for producing a structured material sheet as a planar or curved screen wall, for example for paper and cardboard production, or a filter support.

14. Use of a method according to at least one of Claims 1 to 11 for producing a structured material sheet as a planar or curved filtering means (23).

15. Use of a method according to at least one of Claims 1 to 11 for producing a structured material sheet for a distributing element, in particular for glass fibre production.

16. Use of a method according to at least one of Claims 1 to 11 for producing a structured material sheet for a metering device, in particular for fluidic media.

## Revendications

1. Procédé de fabrication d'une bande de matière structurée en un matériau en bande, le procédé comprenant les étapes suivantes :
- prévoir un matériau en bande (1),
- former des trous (3) dans le matériau en bande (1),
- exécuter une opération de structuration primaire dans laquelle on réalise dans le matériau en bande une structuration tridimensionnelle qui présente des bourrelets ou des plis (9, 10) ainsi que des structures dans les parties de surface enfermées par les bourrelets ou les plis (9, 10) pour former des cuvettes (8) entourées par les plis (9, 10) dans le cas d'une structure bombée ou des calottes (21) entourées par les bourrelets (9, 10) dans le cas d'une structure tridimensionnelle ondulée, et
- exécuter une opération de structuration secondaire,
**caractérisé en ce que**
lors de l'exécution de l'opération de structuration secondaire du matériau en bande, une structuration tridimensionnelle en forme de facettes, qui présente des surfaces (15, 16) en facettes planes ou légèrement cintrées réparties dans l'espace dans les parties de surface enfermées est réalisée en exerçant une poussée sur le côté convexe des cuvettes ou calottes (8, 21) et en repoussant leur côté concave contre des éléments de soutien (14) qui convergent en un point d'étoile, grâce à quoi les cuvettes (8) ou calottes (21) s'enfoncent entre les éléments de soutien,
**en ce que** l'un des trous (3) est disposé en un emplacement d'extremum (4) des parties de surface enfermées, à savoir à l'emplacement (4) le plus bas de chacune des structures formées sous la forme de surfaces (15, 16) en facettes, la partie de surface enfermée en chaque emplacement de la partie de surface enfermée formant une pente vers l'emplacement d'extremum.

2. Procédé selon la revendication 1, **caractérisé en ce que** la structuration tridimensionnelle du matériau en bande de l'opération de structuration primaire est réalisée à l'aide d'une auto-organisation contrôlée.

3. Procédé selon les revendications 1 ou 2, **caractérisé en ce qu'**une poussée est appliquée sur le côté convexe des moulures (8) ou calottes (21) à l'aide d'un cylindre élastique de poussée (5) ou au moyen d'un milieu fluide d'action.

4. Procédé selon au moins l'une des revendications précédentes, **caractérisé en ce que** les surfaces (15, 16) en facettes ont la forme de pyramides.

5. Procédé selon la revendication 4, **caractérisé en ce que** la pointe (4) des pyramides est rehaussée.

6. Procédé selon au moins l'une des revendications précédentes, **caractérisé en ce que** les surfaces (15, 16) en facette sont toutes dotées de plusieurs trous (3).

7. Procédé selon au moins l'une des revendications précédentes, **caractérisé en ce que** le matériau en bande (1) fabriqué avec la structuration tridimensionnelle en forme de facettes est cintré en forme de tambour (19, 20) de telle sorte que les trous (3) de l'emplacement d'extremum (4) de la surface en facette (15, 16) soient tous disposés sur le rayon extérieur ou sur le rayon intérieur de la forme du tambour (19, 20).

8. Procédé selon au moins l'une des revendications précédentes, **caractérisé en ce que** le matériau en bande (1) doté de la structuration tridimensionnelle en forme de facettes est converti sans coude en une forme cintrée.

9. Procédé selon au moins l'une des revendications précédentes, **caractérisé en ce que** le matériau en bande est configuré sous la forme d'un matériau en grille de mailles, en tissu ou en matériau textile.

10. Procédé selon au moins l'une des revendications précédentes, **caractérisé en ce que** le matériau en bande est sélectionné dans l'ensemble de matériaux ci-dessous : métaux, matières synthétiques, fibres naturelles, fibres de carbone, fibres de verre, carton et papier.

11. Procédé selon au moins l'une des revendications précédentes, **caractérisé en ce qu'**avant ou après la formation des trous ou avant ou après la structuration tridimensionnelle, un revêtement antiadhésif ou une surface antiadhésive, en particulier du type à effet lotus, est formé sur la surface du matériau en bande.

12. Utilisation d'un procédé selon au moins l'une des revendications précédentes pour la fabrication d'une bande de matière structurée servant de paroi d'un tambour d'une machine de traitement de linge.

13. Utilisation d'un procédé selon au moins l'une des revendications 1 à 11 pour la fabrication d'une bande de matière structurée servant de paroi plane ou cintrée de tamis, par exemple pour la fabrication de papier ou de carton, ou soutien de filtre.

14. Utilisation d'un procédé selon au moins l'une des revendications 1 à 11 pour la fabrication d'une bande de matière structurée servant de moyen de filtration plan ou cintré (23).

15. Utilisation d'un procédé selon au moins l'une des revendications 1 à 11 pour la fabrication d'une bande de matière structurée servant d'élément de répartition, en particulier en fabrication de fibres de verre.

16. Utilisation d'un procédé selon au moins l'une des revendications 1 à 11 pour la fabrication d'une bande de matière structurée servant de dispositif de dosage, en particulier de milieux fluides.
